# EUROPEAN PATENT APPLICATION

(11) **EP 4 838 946 A1**
(43) Date of publication of application: **11.11.2026**
(21) Application number: 25752340.7
(22) Date of filing: 04.02.2025
(51) Int. Cl.: H04W 28/02, H04W 52/02, H04L 5/00, H04W 24/02, H04W 92/16

(54) **ELECTRONIC DEVICE AND METHOD FOR TRANSMITTING INFORMATION FOR ENERGY SAVING**

(30) Priority: 05.02.2024 KR 20240017759
(71) Applicant: Samsung Electronics Co., Ltd., Suwon-si, Gyeonggi-do 16677 (KR)
(72) Inventor: SONG, Junhyuk, Suwon-si, Gyeonggi-do 16677 (KR); KANG, Seungwon, Suwon-si, Gyeonggi-do 16677 (KR); KHO, Youngsung, Suwon-si, Gyeonggi-do 16677 (KR); KIM, Chulmin, Suwon-si, Gyeonggi-do 16677 (KR); LEE, Chungkeun, Suwon-si, Gyeonggi-do 16677 (KR)
(74) Representative: Gulde & Partner
(86) International application number: PCT/KR2025/001651
(87) International publication number: WO 2025/170294

(57) **Abstract**

A method performed by a device of a near real-time (near-RT) radio access network intelligent controller (RIC), according to one embodiment, comprises an operation of transmitting an RIC control message to an E2 node via an E2 interface. The RIC control message includes information on a 5G quality of service (QoS) identifier (5QI), information on a maximum bit rate for a non-guaranteed bit rate (non-GBR) flow, and information on an averaging window for calculating a non-GBR flow bit rate.

## Description

### [Technical Field]

The present disclosure relates to a wireless communication system. More specifically, the present disclosure relates to an electronic device and a method for transmitting information for energy saving in the wireless communication system.

### [Background Art]

After commercialization of a 4th generation (4G) communication system, an improved 5th generation (5G) communication system or pre-5G communication system is being developed and increased to meet demand for wireless data traffic. For this reason, the 5G communication system or the pre-5G communication system is referred to as a Beyond 4G network communication system or a Post Long Term Evolution (LTE) system.

In order to achieve a high data transmission rate, implementation of the 5G communication system in an ultra-high frequency (mmWave) band (e.g., such as a 60-gigahertz (60 GHz) band) is being considered. In order to mitigate path loss of radio waves and increase a transmission distance of the radio waves in the ultra-high frequency band, advanced technologies such as beamforming, massive MIMO, and Full Dimensional MIMO (FD-MIMO) and array antenna, analog beam-forming, and large scale antenna technologies are being discussed and developed for the 5G communication system.

In addition, for network improvement, in the 5G communication system, technologies such as a cloud radio access network (cloud RAN), an evolved small cell and advanced small cell, an ultra-dense network, Device to Device communication (D2D), wireless backhaul, a moving network, cooperative communication, Coordinated Multi-Points (CoMP), interference cancellation, and the like are being developed.

Furthermore, in the 5G communication system, Hybrid Frequency Shift Keying and Quadrature Amplitude Modulation (FQAM) and Sliding Window Superposition Coding (SWSC), which are Advanced Coding Modulation (ACM) schemes, are under development. In addition, Filter Bank Multi Carrier (FBMC), Non Orthogonal Multiple Access (NOMA), Sparse Code Multiple Access (SCMA), and the like, which are advanced access technologies, are being developed.

In order to meet demand for wireless data traffic, a new radio (or next radio) (NR), which is the 5G communication system, is being commercialized. The 5G communication system provides a user with a service having a high data transmission rate, similar to the 4G communication system. In addition, the 5G communication system provides a wireless communication service having various purposes, such as the Internet of Things, a service requiring high reliability for a specific purpose, and the like. In a system in which a fourth-generation communication system, a fifth-generation system, and the like are mixed, an open radio access network (O-RAN), which is jointly established by operators and equipment providers, defines a new network element (NE) and an interface specification based on 3rd generation partnership project (3GPP) specification and presents an O-RAN architecture. The O-RAN is jointly established by operators and equipment providers.

The above-described information may be provided as a related art for the purpose of helping understanding of the present disclosure. No argument or decision is made as to whether any of the above description may be applied as a prior art related to the present disclosure.

### [Disclosure]

### [Technical Solution]

According to an embodiment, a method performed by an apparatus of a near-real-time (RT) radio access network intelligent controller (RIC) may comprise transmitting, to an E2 node, a RIC control message through an E2 interface. The RIC control message may include information on a 5G quality of service (QoS) identifier (5QI), information on a maximum bit rate flow for a non-guaranteed bit rate (non-GBR) flow, and information on an average window for calculating a non-GBR flow bit rate.

According to an embodiment, a method performed by an apparatus of an E2 node may comprise receiving, from a near-real-time (RT) radio access network intelligent controller (RIC), a RIC control message through an E2 interface. The RIC control message may include information on a 5G quality of service (QoS) identifier (5QI), information on a maximum bit rate flow for a non-guaranteed bit rate (non-GBR) flow, and information on an average window for calculating a non-GBR flow bit rate.

According to an embodiment, an apparatus of a near-real-time (RT) radio access network intelligence controller (RIC) may comprise a transceiver, a processor, and memory including instructions. The instructions, when executed by the processor, may cause the apparatus to transmit, to an E2 node, a RIC control message through an E2 interface. The RIC control message may include information on a 5G quality of service (QoS) identifier (5QI), information on a maximum bit rate flow for a non-guaranteed bit rate (non-GBR) flow, and information on an average window for calculating a non-GBR flow bit rate.

According to an embodiment, an apparatus of an E2 node may comprise a transceiver, a processor, and memory including instructions. The instructions, when executed by the processor, may cause the apparatus to receive, from a near-real-time (RT) radio access network intelligent controller (RIC), a RIC control message through an E2 interface. The RIC control message may include information on a 5G quality of service (QoS) identifier (5QI), information on a maximum bit rate flow for a non-guaranteed bit rate (non-GBR) flow, and information on an average window for calculating a non-GBR flow bit rate.

According to an embodiment, a non-transitory computer readable storage medium may store one or more programs. The one or more programs may comprise instructions that, when executed by a processor of an apparatus of a near-real-time (RT) radio access network intelligence controller (RIC) comprising a transceiver, may cause the apparatus to transmit, to an E2 node, a RIC control message through an E2 interface. The RIC control message may include information on a 5G quality of service (QoS) identifier (5QI), information on a maximum bit rate flow for a non-guaranteed bit rate (non-GBR) flow, and information on an average window for calculating a non-GBR flow bit rate.

### [Description of the Drawings]

FIG. 1 illustrates an example of a core network of a 4th generation (4G) Long Term Evolution (LTE) communication system.
FIG. 2 illustrates an example of a core network of a 5th generation (5G) communication system.
FIG. 3 illustrates an example of an architecture for an O-RAN.
FIG. 4A illustrates an example of a connection between an E2 node and a radio access network intelligence controller (RIC) in a 5G communication system.
FIG. 4B illustrates a protocol stack of an E2 application protocol message.
FIG. 5 illustrates a configuration of an electronic device in a radio access network.
FIG. 6 illustrates a logical function related to an E2 message of an E2 node and a RIC in a radio access network.
FIG. 7 illustrates examples of functional split between an E2 node or a base station and a RIC.
FIG. 8 illustrates an implementation example of an E2 node and a RIC.
FIG. 9 illustrates examples of functional split between a central unit (CU) and a RIC.
FIG. 10 illustrates an example of an operation of a non-RT RIC, a Near-RT RIC, and an E2 node for performing energy saving.
FIG. 11 illustrates an example of an operation of a Near-RT RIC and an E2 node for performing energy saving.
FIG. 12 illustrates an example of an operation of a Near-RT RIC and an E2 node for performing energy saving.
FIG. 13 illustrates an example of an operation of a Near-RT RIC and an E2 node for performing energy saving.
FIGS. 14A and 14B illustrate examples of operations of an E2 node according to an average window.
FIG. 15 is a flowchart related to an operation of a Near-RT RIC for performing energy saving.
FIG. 16 is a flowchart related to an operation of an E2 node for performing energy saving.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

Terms referring to a signal (e.g., signal, information, message, signaling), terms referring to a data type (e.g., list, set, subset), terms for an operation state (e.g., step, operation, procedure), terms referring to data (e.g., packet, user stream, information, bit, symbol, codeword), terms referring to a resource (e.g., symbol, slot, subframe, radio frame, subcarrier, resource element (RE), resource block (RB), bandwidth part (BWP), occasion), terms referring to a channel, terms referring to network entities, terms referring to a component of a device, and the like, used in the following description, are exemplified for convenience of description. Accordingly, the present disclosure is not limited to the terms to be described below, and another term having an equivalent technical meaning may be used.

Terms referring to a configuration (e.g., setup, setting, arrangement, control), terms referring to a signal (e.g., packet, message, signal, information, signaling), terms referring to a resource (e.g., section, symbol, slot, subframe, radio frame, subcarrier, resource element (RE), resource block (RB), bandwidth part (BWP), occasion), terms for an operation state (e.g., step, operation, procedure), terms referring to data (e.g., packet, message, user stream, information, bit, symbol, codeword), terms referring to a channel, terms referring to network entities (e.g., distributed unit (DU), radio unit (RU), central unit (CU), CU-control plane (CP), CU-user plane (UP), open radio access network (O-RAN) DU (O-DU), O-RAN RU (O-RU), O-RAN CU (O-CU), O-RAN CU-CP (O-CU-UP), O-RAN CU-CP (O-CU-CP)), terms referring to a component of a device, and the like, used in the following description, are exemplified for convenience of description. Therefore, the present disclosure is not limited to terms to be described below, and another term having an equivalent technical meaning may be used. In addition, a term such as '...unit', '...device', '...object', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

The present disclosure describes various embodiments using terms used in some communication standards (e.g., 3rd Generation Partnership Project (3GPP), European Telecommunications Standards Institute (ETSI), an extensible radio access network (xRAN), and an open-radio access network (O-RAN)), but this is merely an example for description. Various embodiments of the present disclosure may be easily modified and applied in another communication system.

As 4^{th} generation (4G)/5^{th} generation (5G) communication systems (e.g., a new radio (NR)) have been commercialized, differentiated service support for a user in a virtualized network has been required. The 3GPP, which is a joint research project among organizations related to mobile communication, aims to prepare a standard for a third generation mobile communication system-which is applicable worldwide-within a scope of the IMT-2000 project of the International Telecommunication Union (ITU). The 3GPP was established in December 1998, and the 3GPP standard is based on an advanced GSM standard and includes all of radio, a core network, and a service architecture in a standardization scope. Accordingly, an open radio access network (O-RAN) newly defines a 3GPP network entity (NE) and a radio unit (RU), a digital unit (DU), a central unit (CU)-control plane (CP), and a CU-user plane (UP), which are nodes configuring a base station, as an O (O-RAN)-RU, an O-DU, an O-CU-CP, and an O-CU-UP, respectively, and additionally standardizes a near-real-time (NRT) radio access network intelligent controller (RIC). The present disclosure is for supporting an operator specific service model in an E2 interface in which the RIC requests a service from the O-DU, the O-CU-CP, or the O-CU-UP. Here, the O-RU, the O-DU, the O-CU-CP, and the O-CU-UP may be understood as entities configuring a RAN that may operate according to an O-RAN standard, and may be referred to as E2 nodes. An interface between the RIC and the E2 nodes with entities configuring the RAN, which may operate according to the O-RAN standard, uses an application protocol (E2AP).

The RIC is a logical node capable of collecting information related to the RAN. For example, the information related to the RAN may include information related to a cell site in which the terminal and the E2 node (e.g., the O-DU, the O-CU-CP, or the O-CU-UP) transmit and receive. The RIC may be implemented in a form of a server centrally disposed at one physical location. For example, a connection may be made through the Ethernet between the O-DU and the RIC, between the O-CU-CP and the RIC, and between the O-CU-UP and the RIC. For this, an interface standard for communication between the O-DU and the RIC, between the O-CU-CP and the RIC, and between the O-CU-UP and the RIC has become necessary, and a definition of message standards such as an E2-DU, an E2-CU-CP, and an E2-CU-UP and procedures between the O-DU, the O-CU-CP, and the O-CU-UP and the RIC is required. In particular, differentiated service support for a user in a virtualized network is required. By concentrating a call processing message/function generated in O-RAN on the RIC, a function definition of a message of the E2-DU, the E2-CU-CP, and the E2-CU-UP for supporting a service for wide cell coverage is required.

The RIC may perform communication with the E2 node (e.g., the O-DU, the O-CU-CP, and/or the O-CU-UP) using the E2 interface. For example, the RIC may set an event occurrence condition through a subscription procedure with the E2 node. The RIC may set a call processing event by generating a subscription Request message and delivering the E2 subscription request message to the E2 node. After the call processing event is set, the E2 node may deliver a subscription response message to the RIC. The E2 node may establish services provided by the Near-RT RIC. For example, the E2 node may transmit a RIC indication message (e.g., report information) to the RIC according to the subscription procedure. For example, the RIC may provide control for the E2 node (e.g., the O-DU, the O-CU-CP, or the O-CU-UP) using a RIC control message.

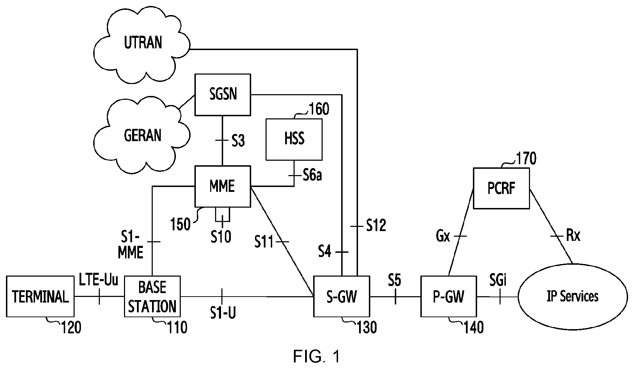

FIG. 1 illustrates an example of a core network of a 4^{th} generation (4G) long term evolution (LTE) communication system.

Referring to FIG. 1, the LTE communication system may include a base station 110, a terminal 120, a serving gateway (S-GW) 130, a packet data network gateway (P-GW) 140, a mobility management entity (MME) 150, a home subscriber server (HSS) 160, and a policy and charging rule function (PCRF) 170.

The base station 110 is a network infrastructure that provides wireless access to the terminal 120. For example, the base station 110 is a device that performs scheduling by collecting state information, such as a buffer state, available transmission power, and a channel state of the terminal 120. The base station 110 has coverage defined as a certain geographical region based on a distance at which a signal may be transmitted. The base station 110 is connected to the MME 150 through an S1-MME interface. In addition to a base station, the base station 110 may be referred to as an 'access point (AP)', an 'eNodeB (eNB)', a 'wireless point', a 'transmission/reception point (TRP)', a RAN node, or another term having an equivalent technical meaning.

The terminal 120 is a device used by a user and performs communication with the base station 110 through a wireless channel. In some cases, the terminal 120 may be operated without involvement of the user. That is, the terminal 120 is a device that performs machine type communication (MTC) and may not be carried by the user. In addition to a terminal, the terminal 120 may be referred to as 'user equipment (UE)', a 'mobile station', a 'subscriber station', 'customer-premises equipment (CPE)', a 'remote terminal', a 'wireless terminal', a 'user device', or another term having an equivalent technical meaning.

The S-GW 130 provides a data bearer, and generates or controls the data bearer according to control of the MME 150. For example, the S-GW 130 processes a packet arriving from the base station 110 or a packet to be forwarded to the base station 110. In addition, the S-GW 130 may perform an anchoring role during handover of the terminal 120 between base stations. The P-GW 140 may function as a connection point with an external network (e.g., an Internet network). In addition, the P-GW 140 assigns an Internet Protocol (IP) address to the terminal 120 and performs an anchoring role for the S-GW 130. In addition, the P-GW 140 may apply a quality of service (QoS) policy of the terminal 120 and manage account data.

The MME 150 manages mobility of the terminal 120. In addition, the MME 150 may perform authentication for the terminal 120, bearer management, and the like. That is, the MME 150 is responsible for mobility management and various control functions for the terminal. The MME 150 may link with a serving GPRS support node (SGSN).

The HSS 160 stores key information and a subscriber profile for authentication of the terminal 120. The key information and the subscriber profile are delivered from the HSS 160 to the MME 150 when the terminal 120 accesses a network.

The PCRF 170 defines a rule for policy and charging. The stored information is delivered from the PCRF 180 to the P-GW 140, and the P-GW 140 may perform control (e.g., QoS management, charging, and the like) for the terminal 120 based on the information provided from the PCRF 180.

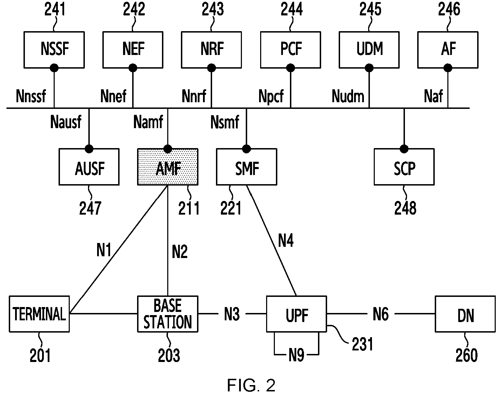

FIG. 2 illustrates an example of a core network of a 5^{th} generation (5G) communication system.

Referring to FIG. 2, the 5G communication system may include a terminal 201, a base station 203, an access and mobility management function (AMF) 211, a session management function (SMF) 221, and a user plane function (UPF) 231. For the terminal 201, descriptions of the terminal 120 of FIG. 1 may be referred to. For the base station 203, a description of the base station 110 may be referred to. The base station 203 may be connected to the AMF 211 through an N2 interface and connected to the UPF 231 through an N3 interface. In addition to a base station, the base station 203 may be referred to as an 'access point (AP)', a 'radio access network (RAN) node', a '5th generation (5G) node', a 'next generation nodeB (gNB)', a 'wireless point', a 'transmission/reception point (TRP)', a 'communication node', a 'wireless communication device', 'wireless communication equipment', a 'network node', a 'network entity', or another term having an equivalent technical meaning. The AMF 211 may provide a function related to mobility management of the terminal 201, registration of a user, authentication, connection establishment, and/or release. The SMF 221 may manage a session and service quality (e.g., quality of service (QoS)) of the terminal 120 in a user plane, and generate and manage a PDU session tunnel using GPT tunneling between the UPF 231 and the base station 203. The UPF 231 may perform a role of processing and routing a user data packet, and provide appropriate processing through classification and prioritization of traffic as necessary. In addition, the UPF 231 may transmit packets through an Internet network by being connected to a data network 260.

A space between the terminal 201 and the base station 203 may be referred to as an access network or a RAN. A set of network entities connected to the base station 203 may be referred to as a 5G core network. The 5G core network may include various network functions (NFs), in addition to the AMF 211, the SMF 221, and the UPF 223. For example, the 5G core network may include a network slice selection function (NSSF) 241, a network exposure function (NEF) 242, a network repository function (NRF) 243, a policy control function (PCF) 244, unified data management (UDM) 245, an application function (AF) 246, an authentication server function (AUSF) 247, and/or a service capability exposure function (SCP) 248. The NSSF 241 may provide selection of a network slice suitable for a user (e.g., the terminal 201). The NEF 242 may provide implementation of a service by allowing a service provider to access a network resource and a network function. The NRF 243 may perform a role of a database capable of searching for and finding a service and a function in a network. The PCF 244 may manage and control service quality and a policy in the network. The UDM 245 may manage and provide a profile and subscription information of the user. The AF 246 may manage network access and resource allocation for a specific service or application. The AUSF 247 may manage authentication information of the user and perform an authentication procedure. The SCP 248 may expose a service function of the network to an external application and support provision of a service.

A base station (e.g., the base station 203) may be implemented in a distributed deployment according to a central unit (CU) (or a control unit) configured to perform functions (e.g., packet data convergence protocol (PDCP) and radio resource control (RRC)) of an upper layer of an access network and a distributed unit (DU) configured to perform a function of a lower layer. For example, between a core network (e.g., a 5G core (5GC) or a next generation core (NGC)) and a radio network (RAN), the base station may be implemented in a structure in which a CU and a DU are disposed in order (or a CU, a DU, and an RU are disposed in order). An interface between the CU and the DU may be referred to as an F1 interface. The CU may be responsible for a function of a layer higher than the DU by being connected to one or more DUs. For example, the CU may be responsible for functions of a radio resource control (RRC) layer and functions of a packet data convergence protocol (PDCP) layer, and the DU (or the DU and the RU) may be responsible for a function of a lower layer. The DU may perform functions of a radio link control (RLC) layer, functions of a media access control (MAC) layer, and functions of a physical (PHY) layer. As a non-limiting example, if the DU is connected to a radio unit (RU), the DU may perform a portion of functions (high PHY) among the functions of the physical layer, and the RU may be responsible for remaining functions (low PHY) of the PHY layer.

Carrier aggregation (hereinafter, 'CA') technology is a technology for increasing frequency utilization efficiency from a perspective of a terminal or a base station by combining a plurality of component carriers and by one terminal simultaneously using such a plurality of component carriers to transmit and receive signals. Specifically, according to the CA technology, the terminal (e.g., the terminal 120 or the terminal 201) and the base station (e.g., the base station 110 or the base station 203) may transmit and receive signals using a wideband by using a plurality of component carriers in an uplink (UL) and a downlink (DL), respectively, and, at this time, each component carrier is located in a different frequency band. Hereinafter, the uplink means a communication link through which the terminal transmits a signal to the base station, and the downlink means a communication link through which the base station transmits a signal to the terminal. At this time, the number of uplink component carriers and the number of downlink component carriers may be different from each other.

Dual connectivity or multi connectivity technology is a technology for increasing frequency utilization efficiency from a perspective of a terminal or a base station by one terminal being connected to a plurality of different base stations and by simultaneously using carriers in each of the plurality of base stations located in different frequency bands to transmit and receive signals. The terminal may transmit and receive traffic by being simultaneously connected to a first base station (e.g., a base station providing a service using LTE technology or fourth generation mobile communication technology) (e.g., the base station 110) and a second base station (e.g., a base station providing a service using new radio (NR) technology or 5^{th} generation (5G) mobile communication technology) (e.g., the base station 203). At this time, frequency resources used by each base station may be located in different bands. For example, a scheme operating based on a dual connectivity scheme of LTE and NR based on an LTE core network (e.g., an evolved packet core (EPC)) may be referred to as 5G non-standalone (NSA). For example, in the 5G communication system, a scheme operating through 5G technology (or LTE technology and 5G technology) based on the 5G core network may be referred to as 5G standalone (SA).

Currently, considering services that 5G mobile communication technology intended to support, discussions for improvement of initial 5G mobile communication technology and performance enhancement are in progress, and physical layer standardization is in progress for technologies such as Vehicle-to-Everything (V2X) for helping a driving determination of an autonomous vehicle and increasing convenience of a user based on its own location and state information transmitted by a vehicle, New Radio Unlicensed (NR-U) aimed at system operation satisfying various regulatory requirements in an unlicensed band, NR terminal low power consumption technology (UE Power Saving), a non-terrestrial network (NTN), which is direct terminal-satellite communication for securing coverage in an area in which communication with a terrestrial network is impossible, and positioning.

In addition, standardization in a radio interface architecture/protocol field is also in progress for technologies such as an intelligent factory (Industrial Internet of Things (IIoT)) for supporting a new service through linkage and convergence with another industry, Integrated Access and Backhaul (IAB) providing a node for expansion of a network service area by integrally supporting a wireless backhaul link and an access link, mobility enhancement technology (Mobility Enhancement) including Conditional Handover and Dual Active Protocol Stack (DAPS) handover, and 2-step random access (2-step RACH for NR) simplifying a random access procedure, and standardization in a system architecture/service field is also in progress for a 5G baseline architecture (e.g., Service based Architecture and Service based Interface) for application of Network Functions Virtualization (NFV) and Software-Defined Networking (SDN) technologies, mobile edge computing (MEC) through which a service is provided based on a location of a terminal, and the like.

When such a 5G mobile communication system is commercialized, connected devices, which are explosively increasing, will be connected to a communication network, and accordingly, enhancement of functions and performance of the 5G mobile communication system and integrated operation of the connected devices are expected to be necessary. For this, new research will be conducted on extended reality (XR) for efficiently supporting augmented reality (AR), virtual reality (VR), mixed reality (MR), and the like, 5G performance improvement and complexity reduction using artificial intelligence (AI) and machine learning (ML), AI service support, metaverse service support, drone communication, and the like.

In addition, such development of the 5G mobile communication system may become a basis for development of a new waveform for ensuring coverage in a terahertz band of 6G mobile communication technology, multiple antenna transmission technologies such as full dimensional MIMO (FD-MIMO), an array antenna, and a large scale antenna, a metamaterial-based lens and antenna for improving coverage of a terahertz band signal, high-dimensional spatial multiplexing technology using orbital angular momentum (OAM), and reconfigurable intelligent surface (RIS) technology, as well as full duplex technology for improving frequency efficiency and a system network of the 6G mobile communication technology, AI-based communication technology for realizing system optimization by utilizing a satellite and artificial intelligence (AI) from a design stage and internalizing an end-to-end AI support function, and next-generation distributed computing technology for realizing a service having complexity exceeding a limitation of terminal computing capability by utilizing ultra-high-performance communication and computing resources.

Although FIGS. 1 to 2 have been described as examples in a 4G and/or 5G environment, these descriptions do not limit a scope of a communication environment of embodiments of the present disclosure. A technical principle according to embodiments of the present disclosure may also be applied to communication technologies and network environments of 6G and beyond 6G.

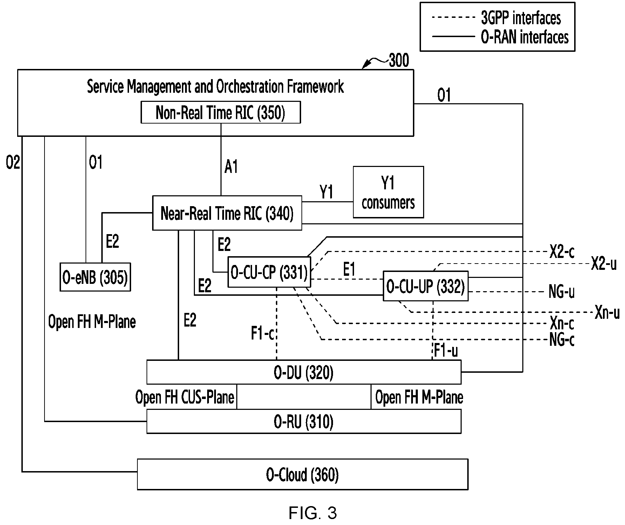

FIG. 3 illustrates an example of an architecture for O-RAN.

Referring to FIG. 3, a logical architecture of the O-RAN may include a service management orchestration (SMO) 300, an O-eNB 305, an O-RU 310, an O-DU 320, an O-CU-CP 331, an O-CU-UP 332, a Near-RT RIC 340, and a Non-RT RIC *350.*

Among various management domains (e.g., RAN management, core management, transport management, and end-to-end (E2E) slice management) in a network of a service provider, the SMO 300 may be responsible for the RAN management. For the RAN management, the SMO 300 may provide a fault, configuration, accounting, performance, and security (FCAPS) interface and RAN optimization using the Non-RT RIC *350.*

The O-eNB 305 may be a node providing an access network in an LTE communication system. For the O-eNB 305, descriptions of the base station 110 of FIG. 1 may be referred to. The O-RU 310, the O-DU 320, the O-CU-CP 331, and the O-CU-UP 332 may be network entities (or nodes) for providing an access network in an NR communication system. For the O-RU 310, the O-DU 320, the O-CU-CP 331, and the O-CU-UP 332, descriptions of the base station 203 of FIG. 2 may be referred to.

The Near-RT RIC 340 is a logical node for customizing RAN functionality for a new service or regional resource optimization. The Near-RT RIC 340 may provide functions such as network intelligence (e.g., policy enforcement and handover optimization), resource assurance (e.g., radio-link management and an advanced self-organized-network (SON)), and resource control (e.g., load balancing and a slicing policy). The Near-RT RIC 340 may be connected to the O-eNB 305, the O-CU-CP 331, the O-CU-UP 332, and/or the O-DU 320. The Near-RT RIC 340 may perform communication with the O-eNB 305, the O-CU-CP 331, the O-CU-UP 332, and/or the O-DU 320. The RIC 340 may be connected to each node through an E2 interface. In addition, an interface between the O-CU-CP 331 and the O-DU 320 may be referred to as an F1-c interface. An interface between the O-CU-UP 332 and the O-DU 320 may be referred to as an F1-u interface. In the following description, a DU and an O-DU, a CU-CP and an O-CU-CP, and a CU-UP and an O-CU-UP may be interchangeably used.

The Non-RT RIC 350 may perform communication with the Near-RT RIC 340 through an A1 interface by being implemented in the SMO 300. Through the A1 interface, a policy management service, an enrichment information service, and a machine learning (ML) model management service may be provided. The Non-RT RIC 350 may drive content delivered through the A1 interface.

The O-Cloud 360 is a cloud computing platform composed of a set of physical infrastructure nodes satisfying O-RAN requirements for hosting related O-RAN functions (e.g., the Near-RT RIC 340, the O-CU-CP 331, the O-CU-UP 332, and the O-DU 320), supporting software components (e.g., an operating system, a virtual machine monitor, a container runtime, and the like), and/or appropriate management and orchestration functions.

In FIG. 3, the O-CU-CP 331 and the O-CU-UP 332 are respectively illustrated according to a split of a control plane and a user plane, but embodiments of the present disclosure are not limited thereto. As a non-limiting example, the O-CU-CP 331 and the O-CU-UP 332 may be understood as one O-CU 330. In addition, FIG. 3 illustrates one Near-RT RIC 340, but, according to various embodiments, a plurality of Near-RT RICs may exist for an O-RAN architecture. The plurality of Near-RT RICs may be implemented as a plurality of hardware located at the same physical location or may be implemented through virtualization using one hardware.

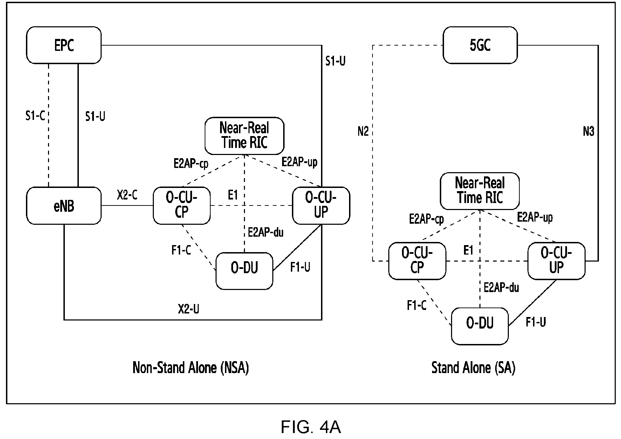

FIG. 4A illustrates an example of a connection between an E2 node and a radio access network intelligence controller (RIC) in a 5G communication system.

Referring to FIG. 4A, the 5G communication system may provide deployment of entities according to a non-standalone mode (e.g., non-standalone (NSA)) or a standalone mode (e.g., standalone (SA)). Network entities configuring a base station (e.g., the base station 110 or the base station 203) may be referred to as E2 nodes, and each network entity may have deployments according to the non-standalone mode or may have deployment according to the standalone mode. For example, in the non-standalone mode, dual connectivity using an eNB and the E2 node may be provided to a terminal. Such dual connectivity using LTE and NR may be referred to as evolved universal terrestrial radio access (E-UTRA)-NR dual connectivity (EN-DC). A CU-CP, a CU-UP, and a DU for operating as a gNB may be referred to as an O-CU-CP 331, an O-CU-UP 332, and an O-DU 320, respectively, by being connected to a Near-RT RIC (e.g., the Near-RT RIC 340) in an O-RAN architecture. For example, in the standalone mode, the E2 nodes may be independently connected to a 5GC. The E2 nodes may be referred to as the O-CU-CP 331, the O-CU-UP 332, and/or the O-DU 320 in the O-RAN architecture. The O-CU-CP 331 may be connected to an AMF (e.g., the AMF 211) in the 5GC through an N2 interface. The O-CU-UP 332 may be connected to a UPF (e.g., the UPF 231) in the 5GC through an N3 interface.

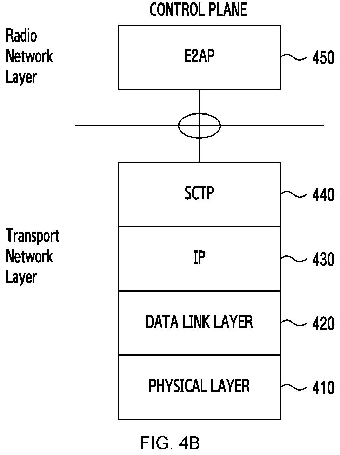

FIG. 4B illustrates a protocol stack of an E2 application protocol message.

Referring to FIG. 4B, a control plane includes a transport network layer and a radio network layer. The transport network layer includes a physical layer 410, a data link layer 420, an internet protocol (IP) 430, and a stream control transmission protocol (SCTP) 440.

The radio network layer includes an E2AP 450. The E2AP 450 is used to deliver a subscription message, an indication message, a control message, a service update message, and a service query message, and is transmitted at a higher layer of the SCTP 440 and the IP 430.

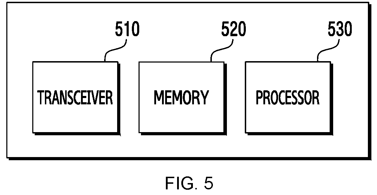

FIG. 5 illustrates a configuration of an electronic device in a radio access network. The structure illustrated in FIG. 5 may be understood as a configuration of an electronic device having a function of at least one of the Near-RT RIC 340, the Non-RT RIC 350, the O-CU-CP 331, the O-CU-UP 332, the O-DU 320, and/or the O-eNB 305 illustrated through FIG. 3. Terms such as '...unit' and '...device' used below mean a unit that processes at least one function or operation, and may be implemented as hardware or software, or a combination of hardware and software.

Referring to FIG. 5, the electronic device may include a transceiver 510, memory 520, and a processor 530.

The transceiver 510 provides an interface for performing communication with other electronic devices in a network. That is, the transceiver 510 converts a bit stream transmitted from the electronic device to another electronic device into a physical signal, and converts the physical signal received from the another electronic device into a bit stream. That is, the transceiver 510 may transmit or receive a signal. Accordingly, the transceiver 510 may be referred to as a modem, a communication unit, a transmit unit, a receive unit, or a transmit/receive unit. At this time, the transceiver 510 enables the electronic device to communicate with other electronic devices or a system through a backhaul connection (e.g., a wired backhaul or a wireless backhaul) or through a network. The transceiver 510 may include one or more transceivers.

The memory 520 stores data such as a basic program, an application program, and setting information for an operation of the electronic device. The memory 520 may be configured of a volatile memory, a non-volatile memory, or a combination of the volatile memory and the non-volatile memory. In addition, the memory 520 provides stored data according to a request of the processor 530. The memory 520 may be referred to as a storage unit.

The processor 530 controls overall operations of the electronic device. For example, the processor 530 transmits and receives a signal through the transceiver 510. In addition, the processor 530 records data in and reads data from the memory 520. The processor 530 may be referred to as a controller. For this, the processor 530 may be configured with a plurality of processors or may include at least one sub-processor. According to various embodiments, the processor 530 may control the electronic device to perform operations according to various embodiments described in the present disclosure.

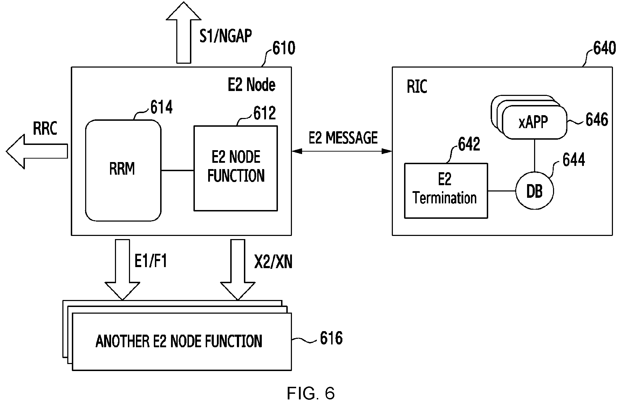

FIG. 6 illustrates a logical function related to an E2 message of an E2 node and a RIC in a radio access network.

Referring to FIG. 6, a RIC 640 and an E2 node 610 may transmit or receive an E2 message to or from each other. For example, the E2 node 610 may be an O-eNB 305, an O-CU-CP 331, an O-CU-UP 332, an O-DU 320, or a base station (e.g., the base station 101 or the base station 203). A communication interface of the E2 node 620 may be determined according to a type of the E2 node 610. For example, the E2 node 610 may perform communication with another E2 node 616 through an E1 interface or an F1 interface. Alternatively, for example, the E2 node 610 may perform communication with the another E2 node 616 through an X2 interface or an XN interface. Alternatively, for example, the E2 node 610 may perform communication with a core network entity through an S1 interface or a next generation application protocol (NGAP) interface (e.g., an interface between the next generation (NG) base station 203 and the AMF 211).

The E2 node 610 may include an E2 node function 612. The E2 node function 612 is a function corresponding to specific application S/W (xApp) 646 installed in the RIC 640. For example, in a case of a KPI monitor, KPI monitor collection S/W is installed in the RIC 640, and the E2 node 610 may include the E2 node function 612 that generates KPI parameters and then delivers an E2 message including a KPI parameter to an E2 termination 642 located in the RIC 640. The E2 node 610 may include radio resource management (RRM) 614. The E2 node 610 may manage resources provided to a radio network for a terminal.

The E2 termination 642 located in the RIC 640, which is a termination of the RIC 640 for the E2 message, performs a function of interpreting the E2 message delivered by the E2 node 610 and then delivering the E2 message to the xApp 646. A database (DB) 644 located in the RIC 640 may be used for the E2 termination 624 or the xApp 646.

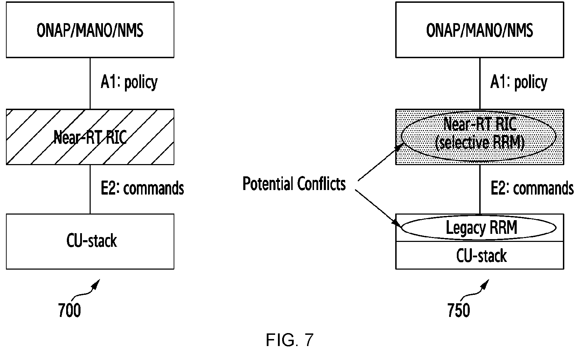

FIG. 7 illustrates examples of a functional split between an E2 node (e.g., the O-eNB 305, the O-CU-CP 331, the O-CU-UP 332, the O-DU 320, or a base station (e.g., the base station 101 or the base station 203)) and a RIC. A RAN standard may provide a functional split between the E2 node and the RIC. For example, the E2 node may be a CU (e.g., the CU 330, the CU-CP 331, or the CU-UP 332). The RIC may be a Near RT RIC 340. The Near RT RIC 340 may be connected to an SMO 300 (e.g., an open network automation platform (ONAP)/management and orchestration (MANO)/a network management system (NMS)) through an A1 interface. For example, the Near RT RIC 340 may be connected to a Non-RT RIC 350 of the SMO 300. The RIC may be connected to the E2 node through an E2 interface. Possible functional split options may include a functional split 700 in which the entire radio resource management (RRM) is managed in the Near-RT RIC 340 and a functional split 750 in which the RRM is selectively managed in the Near-RT RIC 340.

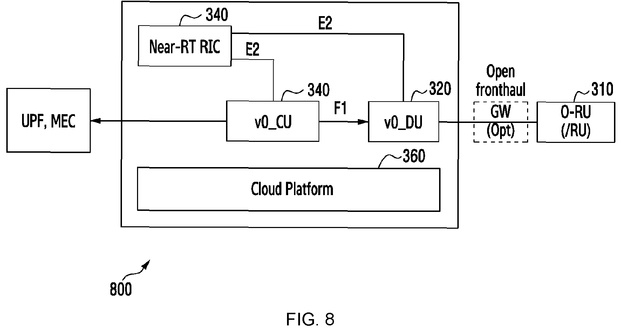

FIG. 8 illustrates an implementation example of an E2 node and a RIC. In a scenario of an implementation example 800, the E2 node (e.g., the O-eNB 305, the O-DU 320, the O-CU 330, the O-CU-CP 331, or the O-CU-UP 332) and the RIC (e.g., the Near-RT RIC 340) may be configured in a device (e.g., a server) by being virtualized in a cloud platform (e.g., an open chassis and blade specification edge cloud). This scenario may provide latency sufficiently low to satisfy an O-DU latency requirement. This scenario may support deployment in a dense urban region with abundant fronthaul capacity allowing a base band unit (BBU) function to be pooled at a central location. Accordingly, it may not be necessary to attempt to centralize a RIC close to real time (RT) beyond a limit at which an O-DU function may be centralized.

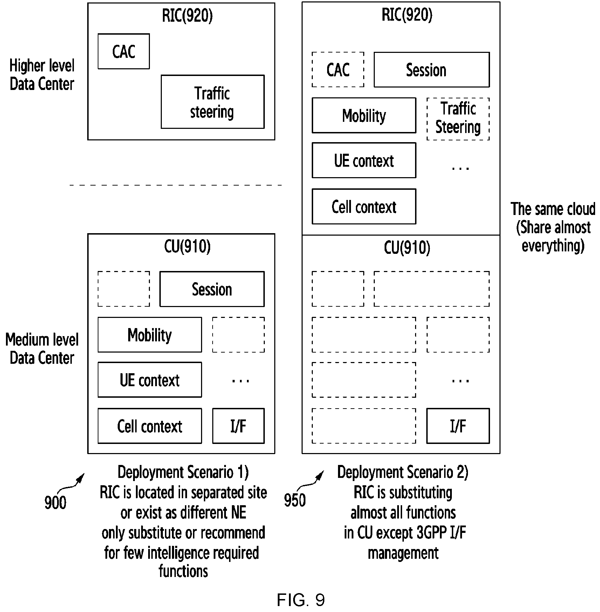

FIG. 9 illustrates examples of a functional split between a central unit (CU) and a RIC.

Referring to FIG. 9, functions for a central unit (CU) 910 (e.g., the O-CU 330, the O-CU-CP 331, or the O-CU-UP 332) and a RIC 920 (e.g., the Near-RT RIC 340) may be split or implemented jointly. According to deployment of the functions, a deployment scenario may be determined. For example, the functions may be distributed according to a deployment scenario #1 900. It may be configured to replace only at least one intelligence-required function (e.g., a traffic steering function or a cell admission control (CAC) function). In the deployment scenario #1 900, the RIC 920 may be located at a separate site or may exist only as another NE. For another example, the functions may be distributed according to a deployment scenario #2 950. In the deployment scenario #2 950, the RIC 920 may replace almost all functions of the CU 910 (e.g., a mobility function, a session function, a UE context function, and a cell context function), except for 3GPP I/F management. In the deployment scenario #2 950, the RIC 920 may be implemented as the same device (e.g., a server device) as the CU 910. For example, in the same cloud, the RIC 920 may share all the functions with the CU 910.

FIG. 9 illustrates two scenarios, but other scenarios may be applied. For example, in the deployment scenario #1 900, a mobility function may be performed by the RIC 920 rather than by the CU 910. In addition, for example, in the deployment scenario #1 900, a UE context function may be performed by the RIC 920 rather than by the CU 910. In addition, for example, in the deployment scenario #1 900, a session function may be performed by the RIC 920 rather than by the CU 910.

According to an embodiment, a Near-RT RIC may instruct an E2 node to perform an operation for energy saving. For example, the Near-RT RIC may determine information for performing energy saving (or at least one parameter for performing energy saving) in the E2 node. The Near-RT RIC may transmit, to the E2 node, information on a policy for performing energy saving. The Near-RT RIC may receive a response message from the E2 node. The Near-RT RIC may transmit a RIC control message to the E2 node based on the response message. The E2 node may perform energy saving based on the RIC control message. In the specification below, an example of an operation of the Near-RT RIC and the E2 node for performing energy saving will be described.

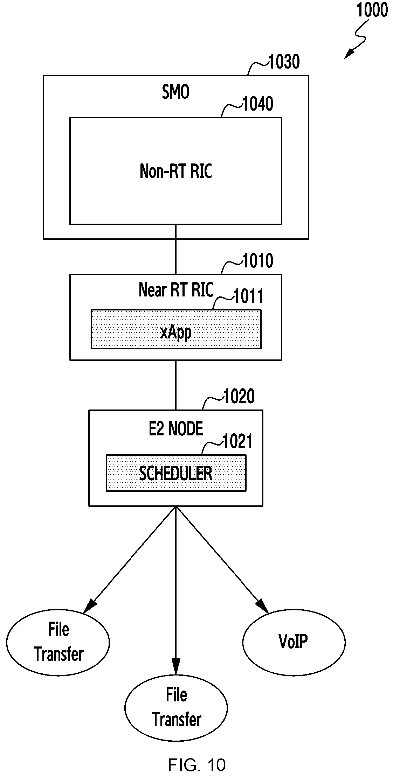

FIG. 10 illustrates an example of an operation of a non-RT RIC, a Near-RT RIC, and an E2 node for performing energy saving.

Referring to FIG. 10, a network architecture 1000 may include a service management orchestrator (SMO) 1030, a Near-RT RIC 1010, and/or an E2 node 1020. The SMO 1030 may be configured to manage network functions.

According to an embodiment, the SMO 1030 may perform configuration, alarm, performance, and/or security management using an O1 interface. The O1 interface may include an interface between the SMO 1030 and the Near-RT RIC 1010. The O1 interface may include an interface between the SMO 1030 and the E2 node 1020.

For example, the SMO 1030 may include a non-RT RIC 1040. The non-RT RIC 1040 may manage deployment, configuration, and/or data related to a RAN node (e.g., an O-CU-UP, an O-CU-CP, an O-DU, or an O-eNB) (or the E2 node 1020). The non-RT RIC 1040 may process services having latency requirements exceeding a specified time (e.g., 1 second). The non-RT RIC 1040 may provide policy and/or enrichment information to the Near-RT RIC 1010 using an A1 interface. The A1 interface may include an interface between the non-RT RIC 1040 and the Near-RT RIC 1010. As an example, the non-RT RIC 1040 may provide policy and/or enrichment information to the Near-RT RIC 1010 through an A1 policy message.

According to an embodiment, the Near-RT RIC 1010 may process services having latency requirements equal to or less than a specified time (e.g., 1 second). For example, the Near-RT RIC 1010 may perform radio resource management, handover control, dual connectivity (DC) control, and load balancing. For example, the Near-RT RIC 1010 may transmit a message for controlling and/or managing the E2 node 1020. The Near-RT RIC 1010 may obtain (or collect) real-time information (e.g., information on a UE or information on a cell) using an E2 interface and may provide a service based on the obtained information.

According to an embodiment, the E2 node 1020 may include an O-CU-UP, an O-CU-CP, an O-DU, and/or an O-eNB. For example, the E2 node 1020 may be connected to one Near-RT RIC 1010. However, the Near-RT RIC 1010 may be connected to one or more E2 nodes.

According to an embodiment, an energy saving function may be provided through the network architecture 1000. For example, the energy saving function may be performed based on at least one of control for a carrier and a cell switch, RF channel reconfiguration, an advanced sleep mode (ASM), or an O-cloud resource energy saving mode. Hereinafter, for convenience of description, the energy saving function will be described through the ASM, but is not limited thereto.

For example, the ASM may be used to control an RU (or an O-RU) connected to the E2 node 1020 to operate in one of a plurality of sleep modes. For example, the non-RT RIC 1040 and/or the Near-RT RIC 1010 may select one of the plurality of sleep modes of the RU (or the O-RU) connected to the E2 node 1020 and may transmit information on the ASM to the E2 node 1020 to control the RU through the selected sleep mode. As an example, the plurality of sleep modes may include a first mode to a third mode. The first mode may be configured to provide a sleep state in units of symbols. The first mode may be referred to as a micro sleep power state. The second mode may be configured to provide a sleep state between 6 milliseconds [ms] and 640 [ms]. The second mode may be referred to as a shallow sleep power state. The third mode may be configured to provide a sleep state between 50 [ms] and 10 seconds [s].

According to an embodiment, the non-RT RIC 1040 and/or the Near-RT RIC 1010 may control (or limit) a function of the RU within a sleep mode. For example, the non-RT RIC 1040 and/or the Near-RT RIC 1010 may deactivate an array-carrier of the RU. For example, the non-RT RIC 1040 and/or the Near-RT RIC 1010 may deactivate one of a tx array carrier or an rx array carrier of the RU. For example, the non-RT RIC 1040 and/or the Near-RT RIC 1010 may deactivate both the tx array carrier and the rx array carrier of the RU.

For example, the non-RT RIC 1040 of the SMO 1030 may transmit, to the Near-RT RIC 1010, through an A1 policy message, information on a policy for controlling the E2 node 1020 at the Near-RT RIC 1010. In the A1 policy message, the information on the policy for controlling the E2 node 1020 at the Near-RT RIC 1010 may include information for controlling the E2 node 1020. For example, the A1 policy message may be referred to as a policy message.

The Near-RT RIC 1010 may identify (e.g., obtain or generate) the information for controlling the E2 node 1020 based on the A1 policy message. The Near-RT RIC 1010 may identify (e.g., obtain or generate) the information for controlling the E2 node 1020 through an xApp 1011. For example, the xApp 1011 may correspond to the xApp 646 of FIG. 6. For example, the xApp 1011 may be configured to perform a function related to energy saving. The Near-RT RIC 1010 may transmit, to the E2 node 1020, the information for controlling the E2 node 1020 through an E2 control message. The information for controlling the E2 node 1020 may include control information for energy saving. For example, the E2 control message may be referred to as a control message or a RIC control message.

For example, the non-RT RIC 1040 of the SMO 1030 may provide a policy related to energy saving to the Near-RT RIC 1010 using the A1 policy message.

The A1 policy message may include at least one of information on a 5G QoS identifier (5QI), information on a maximum flow bit rate for a non-GBR flow, and/or information on an average window. The Near-RT RIC 1010 may provide the control information for energy saving to the E2 node 1020 using an E2 control message. For example, the E2 control message may include information for initiating activation or deactivation of energy saving and/or information on an energy saving policy. The information on the energy saving policy may include at least one of information on a 5G QoS identifier (5QI), information on a maximum flow bit rate for a non-GBR flow, and/or information on an average window.

The E2 node 1020 may perform an operation related to energy saving using a scheduler 1021 based on the E2 control message. The E2 node 1020 may perform the operation related to energy saving by controlling a sleep state of the RU connected to the E2 node 1020.

The E2 node 1020 may transmit state information on energy saving to the Near-RT RIC 1010. The state information on energy saving may include information for indicating whether an energy saving function related to a cell is performed, information for indicating a state related to energy saving, and/or information on an energy saving policy. For example, the information on the energy saving policy may include at least one of information on a 5G QoS identifier (5QI), information on a maximum flow bit rate for a non-GBR flow, and/or information on an average window.

For example, the control information for energy saving may include control information for energy saving according to a service corresponding to a 5QI. As an example, according to the service corresponding to the 5QI, at least one of information on a maximum flow bit rate for a non-GBR flow and/or an average window may be differently configured. For example, the service corresponding to the 5QI may include a service for file transfer, voice over Internet protocol (VoIP), live streaming, transmission and/or reception of a vehicle-to-everything (V2X) message, and/or augmented reality.

In the specification below, a specific operation of the Near-RT RIC 1010 and/or the E2 node 1020 for performing energy saving will be described.

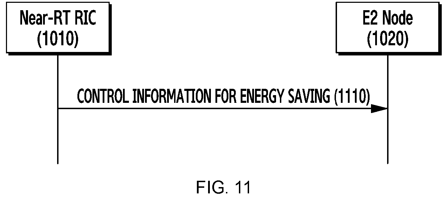

FIG. 11 illustrates an example of an operation of a Near-RT RIC and an E2 node for performing energy saving.

Referring to FIG. 11, in operation 1110, a Near-RT RIC 1010 may transmit control information for energy saving to an E2 node 1020. For example, the control information for energy saving may include information for initiating activation or deactivation of energy saving and/or information on an energy saving policy. The information on the energy saving policy may include at least one of information on a 5G QoS identifier (5QI), information on a maximum flow bit rate for a non-GBR flow, and/or information on an average window. For example, the control information on energy saving may be configured as in the table below.

**[Table 1]**

| **IE/Group Name** | **Supported Services** | **Is writable** | **IE type and reference** | **Semantics description** |
|---|---|---|---|---|
| energySavingControl | REPORT, CONTROL | TRUE | ENUMERATED (toBeEnergySaving, toBeNotEnergySaving) | Please refer to [6] clause 4.4.1, "energySavingControl". This attribute allows the Near-RT RIC to initiate energy-saving activation or deactivation. |
| asmPolicyList | REPORT, CONTROL | TRUE | | Represents a list of Advanced Sleep Mode policies. |

Referring to Table 1, the control information for energy saving may include the 'energySavingControl' and/or the 'asmPolicyList'. The 'energySavingControl' may be an example of information for initiating activation or deactivation of energy saving. The 'asmPolicyList' may be an example of the information on the energy saving policy. The 'asmPolicyList' may indicate a list of policies related to an ASM. For example, the [6] may indicate 3GPP TS 28.541 specification.

For example, the 'asmPolicyList' may include information according to the table below.

**[Table 2]**

| **IE/Group Name** | **Range** |
|---|---|
| asmPolicyList | *1..<maxnoofAsmPolicy>* |
| >asmPolicy | |

Referring to Table 2, the 'asmPolicyList' may include the 'asmPolicy'. The 'asmPolicy' may include information according to the table below.

**[Table 3]**

| **IE/Group Name** | **Semantics description** |
|---|---|
| sleepModeConfiguration | This configuration is defined to guide O-DU on entering a particular sleep mode during specified time. Following the guidance, O-DU may decide to disable ("move to sleep mode") array carriers, tx-arrays or rx-arrays or the whole O-RU accordingly via the O-FH C-plane in order to save energy [x], Table 7.4.6-8. |
| asmObjective | Configuration of ASM performance objectives to the E2 node. |

Referring to Table 3, the 'asmPolicy' (or 'asmPolicyList') may include the 'sleepModeConfiguration' and/or the 'asmObjective'. The 'sleepModeConfiguration' is information for guiding an O-DU to enter a specific sleep mode within a specified time. The O-DU may perform energy saving by deactivating at least one of an array carrier of an O-RU, a tx array carrier of the O-RU, an rx array carrier of the O-RU, or the O-RU based on the 'sleepModeConfiguration'. The 'asmObjective' is configuration information on an ASM performance objective.

For example, the 'asmobjective' may include information according to the table below.

**[Table 4]**

| **IE/Group Name** | **Presence** | **Range** | **IE type and reference** | **Semantics description** |
|---|---|---|---|---|
| dataDirection | M | | ENUMERATED (asmControlOnDL, asmControlOnUL) | Applied data direction, DL or UL. |
| perfObiectiveList | | *1..<maxnoofObjectives>* | | |
| >perfobjective | O | | 9.3.x7 | Indicate the expected performance target to be achieved for a 5QI. i.e. expected performance degradation in turn to energy saving. |
| esObjective | M | | 9.3.x8 | Indicate the expected cell energy saving target. |

Referring to Table 4, the 'asmObjective' may include the 'dataDirection', the 'perfObjectiveList', the 'perfObjective', and/or the 'esObjective'. The 'dataDirection' is information indicating a direction in which data is transmitted. The 'dataDirection' may indicate one of downlink (DL) and uplink (UL). The 'perfObjectiveList' is information indicating a list of the 'perfObjective'. The 'perfObjective' is information indicating an expected performance objective to be achieved for a 5QI. The 'perfObjective' may indicate an expected performance degradation due to energy saving. The 'esObjective' is information indicating an expected energy saving objective of a cell.

For example, the 'esObjective' may include information according to the table below.

**[Table 5]**

| **IE/Group Name** | **Presence** | **Range** | **IE type and reference** | **Semantics description** |
|---|---|---|---|---|
| 5qi | M | | 3GPP TS 23.501, clause 5.7.4 | 5QI values |
| mNgbrFbr | M | | REAL | Maximum Flow Bit Rate for Non-GBR flows. |
| Averaging Window | M | | INTEGER (0..4095, ...) | Unit: ms. The default value of the IE is 2000ms. |

Referring to Table 5, the 'esObjective' may include the '5qi', the 'mNgbrFbr', and/or the 'Averaging Window'. The '5qi' may be an example of information on a 5G QoS identifier (5QI).

The '5qi' may indicate a 5QI value. For example, the '5qi' may be configured based on 3GPP TS 23.501 specification. For QoS characteristics related to the '5qi', the table below may be referred to.

**[Table 6]**

| 5 QI V alue | R esource Type | efault Priorit y Level | P acket Delay Budget ( NOTE 3 ) | acket Error ate | D efault Maximu m Data Burst Volume ( NOTE 2) | D efault A veraging Window | Exam ple Services |
|---|---|---|---|---|---|---|---|
| 1 | GBR ( NOTE 1 ) | 0 | 1 00 ms ( NOTE 1 1, N OTE 13) | 0⁻² | N /A | 2 000 ms | Conve rsational Voice |
| 2 | | 0 | 1 50 ms ( NOTE 1 1, N OTE 13) | 0⁻³ | N /A | 2 000 ms | Conve rsational Video (Live Streaming) |
| 3 | | 0 | 5 0 ms(N OTE 11, N OTE 13) | 0⁻³ | N /A | 2 000 ms | Real Time Gaming, V2X messages (see TS 23.287 [1 21]). Electri city distribution - medium voltage, Process automation monitoring |
| 4 | | 0 | 3 00 ms(N OTE 11, N OTE 13) | 0⁻⁶ | N /A | 2 000 ms | Non-Conversation al Video (Buffered Streaming) |
| 6 5(NOTE 9, N OTE 12) | | | 7 5 ms ( NOTE 7 , NOTE 8 ) | 10⁻² | N /A | 2 000 ms | Missi on Critical user plane Push To Talk voice (e.g. MCPTT) |
| 6 6(NOTE 12) | | 20 | 1 00 ms ( NOTE 1 0, N OTE 13) | 10⁻² | N /A | 2 000 ms | Non-Mission-Critical user plane Push To Talk voice |
| 6 7(NOTE 12) | | 5 | 1 00 ms ( NOTE 10, N OTE 13) | 0⁻³ | N /A | 2 000 ms | Missi on Critical Video user plane |
| 7 5(NOTE 14) | | | | | | | |
| 7 1 | | 6 | 1 50 ms (NOTE 11, NOTE 1 3, NOTE 1 5) | 0⁻⁶ | N /A | 2 000 ms | "Live" Uplink Streaming (e.g. TS 26.238 [7 6]) |
| 7 2 | | 6 | 3 00 ms (NOTE 11, NOTE 1 3, NOTE 1 5) | 0⁻⁴ | N /A | 2 000 ms | "Live" Uplink Streaming (e.g. TS 26.238 [7 6]) |
| 7 3 | | 6 | 3 00 ms (NOTE 11, NOTE 1 3, NOTE 1 5) | 0⁻⁸ | N /A | 2 000 ms | "Live" Uplink Streaming (e.g. TS 26.238 [7 6]) |
| 7 4 | | 6 | 5 00 ms (NOTE 11, NOTE 1 5) | 0⁻⁸ | N /A | 2 000 ms | "Live" Uplink Streaming (e.g. TS 26.238 [7 6]) |
| 7 6 | | 6 | 5 00 ms (NOTE 11, NOTE 1 3, NOTE 1 5) | 0⁻⁴ | N /A | 2 000 ms | "Live" Uplink Streaming (e.g. TS 26.238 [7 6]) |
| 5 | | 0 | 1 00 ms N OTE 10, N OTE 13) | 0⁻⁶ | N /A | N /A | IMS Signalling |
| 6 | N on-GBR ( NOTE 1 ) | 60 | 300 ms ( NOTE 1 0, N OTE 13) | 10⁻⁶ | N /A | N /A | Video (Buffered Streaming) TCP-based (e.g. www, e-mail, chat, ftp, p2p file sharing, progressive video, etc.) |
| 7 | | 70 | 100 ms( NOTE 1 0, N OTE 13) | 10⁻³ | N /A | N /A | Voice, Video (Live Streaming) Interactive Gaming |
| 8 | | 80 | | | | | |
| 9 | | 0 | 300 ms ( NOTE 1 3) | 10⁻⁶ | N/A | N/A | Video (Buffered Streaming) TCP-based (e.g. www, e-mail, chat, ftp, p2p file sharing, progressive video, etc.) |
| 6 9(NOTE 9, NOTE 1 2) | | | 6 0 ms ( NOTE 7 , NOTE 8 ) | 0⁻⁶ | N /A | N /A | Missi on Critical delay sensitive signalling (e.g. MC-PTT signalling) |
| 7 0 ( NOTE 1 2) | | 5 | 2 00 ms ( NOTE 7 , N OTE 10) | 0⁻⁶ | N /A | N /A | Missi on Critical Data (e.g. example services are the same as 5QI 6/8/9) |
| 7 9 | | 5 | 5 0 ms(N OTE 10, N OTE 13) | 0⁻² | N /A | N /A | V2X messages (see TS 23.287 [1 21]) |
| 8 0 | | 8 | 1 0 ms ( NOTE 5 , N OTE 10) | 0⁻⁶ | N /A | N /A | Low Latency eMBB applications Augmented Reality |
| 8 2 | D elay-critical GBR | 9 | 1 0 ms (NOTE 4) | 0⁻⁴ | 2 55 bytes | 2 000 ms | Discre te Automation (see TS 22.261 [2] ) |
| 8 3 | | 2 | 1 0 ms (NOTE 4) | 0⁻⁴ | 1 354 bytes ( NOTE 3) | 2 000 ms | Discre te Automation (see TS 22.261 [2] ); V2X messages (UE - RSU Platooning, Advanced Driving: Cooperative Lane Change with low LoA. See TS 22.186 [1 11], TS 23.287 [1 21]) |
| 8 4 | | 4 | 3 0 ms(N OTE 6) | 0⁻⁵ | 1 354 bytes ( NOTE 3) | 2 000 ms | Intelli gent transport systems (see TS 22.261 [2] ) |
| 8 5 | | 1 | 5 ms(NO TE 5) | 0⁻⁵ | 2 55 bytes | 2 000 ms | Electri city Distribution-high voltage (see TS 22.261 [2] ). V2X messages (Remote Driving. See TS 22.186 [1 11], NOTE 16, see TS 23.287 [1 21]) |
| 8 6 | | 8 | 5 ms ( NOTE 5) | 0⁻⁴ | 1 354 bytes | 2 000 ms | V2X messages (Advanced Driving: Collision Avoidance, Platooning with high LoA. See TS 22.186 [1 11], TS 23.287 [1 21]) |
| NOTE 1: A packet which is delayed more than PDB is not as counted lost, thus not included in the PER. | | | | | | | |
| NOTE 2: It is required that default MDBV is supported by a PLMN supporting the related 5QIs. | | | | | | | |
| NOTE 3: The Maximum Transfer Unit (MTU) size considerations in clause 9.3 and Annex C of TS 23.060 [56] are also applicable. IP fragmentation may have impacts to CN PDB, and details are provided in clause 5.6.10. | | | | | | | |
| NOTE 4: A static value for the CN PDB of 1 ms for the delay between a UPF terminating N6 and a 5G-AN should be subtracted from a given PDB derive to the packet delay budget that applies to the radio interface. When a dynamic CN PDB is used, see clause 5.7.3.4. | | | | | | | |
| NOTE 5: A static value for the CN PDB of 2 ms for the delay between a UPF terminating N6 and a 5G-AN should be subtracted from a given PDB to derive the packet delay budget that applies to the radio interface. When a dynamic CN PDB is used, see clause 5.7.3.4. | | | | | | | |
| NOTE 6: A static value for the CN PDB of 5 ms for the delay between a UPF terminating N6 and a 5G-AN should be subtracted from a given PDB to derive the packet delay budget that applies to the radio interface. When a dynamic CN PDB is used, see clause 5.7.3.4. | | | | | | | |
| NOTE 7: For Mission Critical services, it may be assumed that the UPF terminating N6 is located "close" to the 5G_AN (roughly 10 ms) and is not normally used in a long distance, home routed roaming situation. Hence a static value for the CN | | | | | | | |
| PDBof 10 ms for the delay between a UPF terminating N6 and a 5G_AN should be subtracted from this PDB to derive the packet delay budget that applies to the radio interface. | | | | | | | |
| NOTE 8: In both RRC Idle and RRC Connected mode, the PDB requirement for these 5QIs can be relaxed (but not to a value greater than 320 ms) for the first packet(s) in a downlink data or signalling burst in order to permit reasonable battery saving (DRX) techniques. | | | | | | | |
| NOTE 9: It is expected that 5QI-65 and 5QI-69 are used together to provide Mission Critical Push to Talk service (e.g. 5QI-5 is not used for signalling).It is expected that the amount of traffic per UE will be similar or less compared to the IMS signalling. | | | | | | | |
| NOTE 10: In both RRC Idle and RRC Connected mode, the PDB requirement for these 5QIs can be relaxed for the first packet(s) in a downlink data or signalling burst in order to permit battery saving (DRX) techniques. | | | | | | | |
| NOTE 11: In RRC Idle mode, the PDB requirement for these 5QIs can relaxed for the first packet(s) in a downlink data or signalling burst in order to permit battery saving (DRX) techniques. be | | | | | | | |
| NOTE 12: This 5QI value can only be assigned upon request from the network side. The UE and any application running on the UE is not allowed to request this 5QI value. | | | | | | | |
| NOTE 13: A static value for the CN PDB of 20 ms for the delay between a UPF terminating N6 and a 5G-AN should be subtracted from a given PDB to derive the packet delay budget that applies to the radio interface. | | | | | | | |
| NOTE 14: This 5QI is not supported in this Release of the specification as it is only used for transmission of V2X messages over MBMS bearers as defined in TS 23.285 [72] but the value is reserved for future use. | | | | | | | |
| NOTE 15: For "live" uplink streaming (see TS 26.238 [76]), guidelines for PDB values of the different 5QIs correspond to the latency configurations defined in TR 26.939 [77]. In order to support higher latency reliable streaming services (above 500ms PDB), if different PDB and PER combinations are needed these configurations will have to use non-standardised 5QIs. | | | | | | | |
| NOTE 16: These services are expected to need much larger MDBV values to be signalled to the RAN. Support for such larger MDBV values with low latency and high reliability is likely to require a suitable RAN configuration, for which,the simulation scenarios in TR 38.824 [112] may contain some guidance. | | | | | | | |

Referring again to Table 5, the 'mNgbrFbr' may be an example of information on a maximum flow bit rate for a non-GBR flow. The 'Averaging Window' may be an example of information on an average window. The 'Averaging Window' may indicate an average window for calculating the maximum flow bit rate. The 'Averaging Window' may indicate a time duration for calculating the maximum flow bit rate. A default value of the 'Averaging Window' may be set to 2000 [ms].

For example, a GBR (or non-GBR) QoS flow may be related to an average window (or the 'Averaging Window'). The average window may indicate a period during which a guaranteed flow bit rate (GFBR) and/or a maximum flow bit rate (MFBR) are calculated. For example, when information on the average window is not transmitted to the E2 node 1020, the E2 node 1020 may calculate the GFBR and/or the MFBR in the E2 node 1020 through a pre-configured value. For example, when the information on the average window is transmitted to the E2 node 1020, the E2 node 1020 may calculate the GFBR and/or the MFBR based on the received information on the average window.

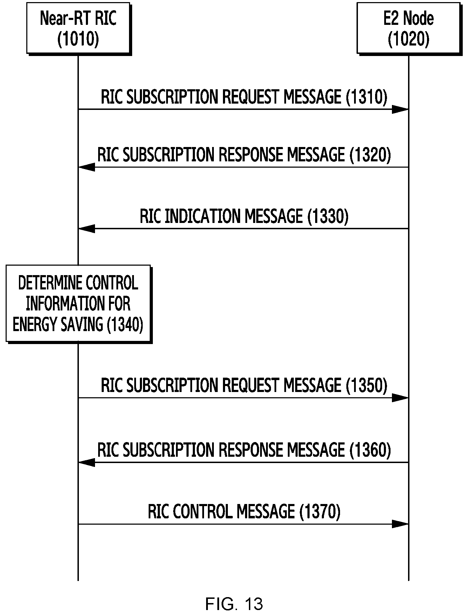

According to an embodiment, control information for energy saving may be transmitted through a RIC control message (or a control message). As a non-limiting example, the RIC control message may be configured by a RIC subscription procedure between the Near-RT RIC 1010 and the E2 node 1020. For example, the Near-RT RIC 1010 may transmit, to the E2 node 1020, a RIC subscription request message for the RIC control message to the E2 node 1020. The E2 node 1020 may transmit a RIC subscription response message in response to the RIC subscription request message. Thereafter, the Near-RT RIC 1010 may transmit, to the E2 node 1020, a RIC control message including the control information for the energy saving. However, it is not limited thereto. According to an embodiment, the control information for energy saving may be included in the RIC subscription request message. According to an embodiment, the control information for energy saving may be included in a RIC indication message. A specific example in which the control information for energy saving is transmitted through the RIC control message will be described later in FIG. 13.

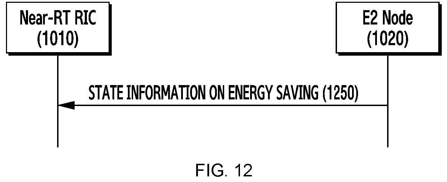

FIG. 12 illustrates an example of an operation of a Near-RT RIC and an E2 node for performing energy saving.

Referring to FIG. 12, in operation 1250, an E2 node 1020 may transmit state information on energy saving to a Near-RT RIC 1010. The Near-RT RIC 1010 may receive the state information on energy saving from the E2 node 1020.

For example, the state information on energy saving may include information on whether an energy saving function for a cell is activated, information on a specific state related to energy saving, and/or information on an energy saving policy. For example, the state information on energy saving may be configured as in the table below.

**[Table 7]**

| **IE/Group Name** | **Supported Services** | **Is writable** | **IE type and reference** | **Semantics description** |
|---|---|---|---|---|
| cesSwitch | REPORT | FALSE | ENUMERATED (TRUE, FALSE) | Please refer to [6] clause 4.4.1, "cesSwitch" attribute. This attribute determines whether the energy-saving function is enabled or disabled for cell. |
| energySavingState | REPORT | FALSE | ENUMERATED (isNotEnergySaving, isEnergySaving) | Please refer to [6] clause 4.4.1, "energySavingState" attribute. Specifies the status regarding the energy-saving in the cell. |
| asmPolicyList | REPORT, CONTROL | TRUE | | Represents a list of Advanced Sleep Mode policies. |

Referring to Table 7, the state information on energy saving may include the 'cesSwitch', the 'energySavingState', and/or the 'asmPolicyList'. The 'cesSwitch' may be an example of information on whether an energy saving function for a cell is activated. The 'cesSwitch' may indicate whether the energy saving function for the cell is activated. The 'energySavingState' may be an example of information on a specific state related to energy saving. The 'energySavingState' may indicate an energy saving state according to a value of the 'energySavingControl' in Table 1. For example, when the value of the 'energySavingControl' is the 'toBeEnergySaving", the 'energySavingState' may indicate a state in which achieving the "isEnergySaving" is attempted. When the value of the 'energySavingControl' is the 'toBeNotEnergySaving", the 'energySavingState' may indicate a state in which achieving the "isNotEnergySaving" is attempted. The 'asmPolicyList' may correspond to the 'asmPolicyList' in Table 1.

According to an embodiment, control information for energy saving may be transmitted through a RIC indication message (or an indication message). The RIC indication message may be used for a report. As a non-limiting example, the RIC indication message may be configured by a RIC subscription procedure between the Near-RT RIC 1010 and the E2 node 1020. For example, the Near-RT RIC 1010 may transmit, to the E2 node 1020, a RIC subscription request message for transmission of the RIC indication message to the E2 node 1020. The E2 node 1020 may transmit a RIC subscription response message in response to the RIC subscription request message. Thereafter, the E2 node 1020 may transmit, to the Near-RT RIC 1010, a RIC indication message including control information for energy saving.

FIG. 13 illustrates an example of an operation of a Near-RT RIC and an E2 node for performing energy saving. In the following embodiment, each of operations may be sequentially performed, but is not necessarily sequentially performed. For example, an order of each of the operations may be changed, and at least two operations may be performed in parallel.

Referring to FIG. 13, in operation 1310 and operation 1320, a Near-RT RIC 1010 and an E2 node 1020 may perform a RIC subscription procedure. The Near-RT RIC 1010 may perform the RIC subscription procedure in order to receive, from the E2 node 1020, a RIC indication message according to operation 1330.

For example, in operation 1310, the Near-RT RIC 1010 may transmit a RIC subscription request message to the E2 node 1020. The RIC subscription request message may be related to a RAN function. The RAN function may be related to an E2 service model-key performance measurement (E2SM-KPM) for energy saving. For example, the RIC subscription request message may be transmitted to request measurement information on the E2 node 1020 (or measurement information on the RAN function).

In operation 1320, the E2 node 1020 may transmit a RIC subscription response message to the Near-RT RIC 1010. For example, the E2 node 1020 may transmit, to the Near-RT RIC 1010, the RIC subscription response message in response to the RIC subscription request message.

In operation 1330, the E2 node 1020 may transmit a RIC indication message to the Near-RT RIC 1010 based on the RIC subscription procedure according to operation 1310 and operation 1320. For example, the RIC indication message may be configured based on one of a plurality of RIC style types according to the table below.

**[Table 8]**

| **RIC Style Type** | **Style Name** | **Style Type Description** |
|---|---|---|
| **1** | E2 Node Measurement | Used to carry measurement report from a target E2 Node |
| 2 | E2 Node Measurement for a single UE | Used to carry measurement report for a single UE of interest from a target E2 Node |
| 3 | Condition-based, UE-level E2 Node Measurement | Used to carry UE-level measurement report for a group of UEs per measurement type matching subscribed conditions from a taget E2 Node |
| 4 | Common Condition-based, UE-level Measurement | Used to carry measurement report for a group of UEs across a set of measurement types satisfying common subscribed conditions from a target E2 Node |
| 5 | E2 Node Measurement for multiple UEs | Used to carry measurement report for multiple UE of interest from a target E2 Node |

According to an embodiment, the RIC indication message may be configured based on one of a plurality of formats. For example, the RIC indication message may be configured based on one of three formats. For RIC style type 1, the RIC indication message may be configured based on a first format. For RIC style type 2, the RIC indication message may be configured based on the first format. For RIC style type 3, the RIC indication message may be configured based on a second format. For RIC style type 4, the RIC indication message may be configured based on a third format. For RIC style type 5, the RIC indication message may be configured based on the third format.

According to an embodiment, the RIC indication message may include the measurement information on the E2 node 1020 (or the measurement information on the RAN function). For example, based on the RIC subscription request message, the E2 node 1020 may transmit, to the Near-RT RIC 1010, the measurement information on the E2 node 1020 through the RIC indication message.

For example, the measurement information on the E2 node 1020 may include information on throughput, a delay, a data size, a session activity time, a packet data convergence protocol (PDCP) drop rate, IP latency, a QoS flow, CQI, and/or a modulation coding scheme (MCS).

In operation 1340, the Near-RT RIC 1010 (or an xApp 1011) may determine (or identify) control information for energy saving. For example, the Near-RT RIC 1010 may determine (or identify) the control information for energy saving based on the measurement information on the E2 node 1020 (or the measurement information on the RAN).

According to an embodiment, the Near-RT RIC 1010 may transmit the measurement information on the E2 node 1020 to a non-RT RIC 1040. The non-RT RIC 1040 may determine control information for energy saving based on the measurement information on the E2 node 1020. The non-RT RIC 1040 may transmit the control information for energy saving to the Near-RT RIC 1010. The Near-RT RIC 1010 may identify the control information for energy saving by receiving the control information for energy saving from the non-RT RIC 1040.

According to an embodiment, the control information for energy saving may correspond to the control information for energy saving according to operation 1110 of FIG. 11. The control information for energy saving may include information according to Tables 1 to 5 described above. For example, the control information for energy saving may include at least one of information on a 5G QoS identifier (5QI), information on a maximum flow bit rate for a non-GBR flow, and/or information on an average window.

In operation 1350 and operation 1360, the Near-RT RIC 1010 and the E2 node 1020 may perform a RIC subscription procedure. The Near-RT RIC 1010 may perform the RIC subscription procedure in order to transmit, to the E2 node 1020, a RIC control message according to operation 1370.

For example, in operation 1350, the Near-RT RIC 1010 may transmit a RIC subscription request message to the E2 node 1020. The RIC subscription request message may be related to a RAN function. The RAN function may be related to an E2 service model-cell configuration and control (E2SM-CCC) for energy saving. For example, the RIC subscription request message may be transmitted in order to transmit control information for energy saving to the E2 node 1020.

In operation 1360, the E2 node 1020 may transmit a RIC subscription response message to the Near-RT RIC 1010. For example, the E2 node 1020 may transmit, to the Near-RT RIC 1010, the RIC subscription response message in response to the RIC subscription request message.

In operation 1370, the Near-RT RIC 1010 may transmit the RIC control message to the E2 node 1020 based on the RIC subscription procedure according to operation 1350 and operation 1360. For example, the RIC control message may be configured based on one of a plurality of RIC style types according to the table below.

**[Table 9]**

| **RIC Style Type** | **Style Name** | **Style Description** |
|---|---|---|
| 1 | Node Configuration and Control | Used to perform node-level configuration and control at the E2 Node |
| 2 | Cell Configuration and Control | Used to perform cell-level configuration and control at the **E2** Node |

According to an embodiment, the RIC control message may be configured based on one of a plurality of formats. For example, the RIC control message may be configured based on one of two formats. For RIC style type 1, the RIC control message may be configured based on a first format. For RIC style type 2, the RIC control message may be configured based on a second format.

According to an embodiment, the RIC control message may include control information for energy saving. An operation in which the Near-RT RIC 1010 transmits the RIC control message to the E2 node 1020 may correspond to operation 1110 of FIG. 11.

Although not illustrated, the E2 node 1020 may transmit a RIC indication message to the Near-RT RIC 1010. For example, the RIC control message may be configured based on one of a plurality of RIC style types according to the table below.

**[Table 10]**

| **RIC Style Type** | **Style Name** | **Style Description** |
|---|---|---|
| 1 | Node-Level Configuration | This style is used to report node-level E2 Node configuration information |
| 2 | Cell-Level Configuration | This style is used to report cell-level E2 Node configuration information |

According to an embodiment, the RIC indication message may include state information on energy saving. The state information on energy saving may include information on whether an energy saving function for a cell is activated, information on a specific state related to energy saving, and/or information on an energy saving policy. The state information on energy saving may include information according to Table 7. An operation in which the E2 node 1020 transmits the RIC indication message to the Near-RT RIC 1010 may correspond to operation 1250 of FIG. 12.

According to an embodiment, a RIC subscription procedure may be performed for a report of the RIC indication message. The RIC subscription procedure for the report of the RIC indication message may be distinguished from the RIC subscription procedure according to operation 1350 and operation 1360. The Near-RT RIC 1010 and the E2 node 1020 may perform the RIC subscription procedure after performing operation 1370. The Near-RT RIC 1010 may receive the RIC indication message from the E2 node 1020 based on the RIC subscription procedure. However, it is not limited thereto. For example, the RIC indication message may be transmitted from the E2 node 1020 based on the RIC subscription procedure according to operation 1350 and operation 1360. According to an embodiment, the RIC control message may be configured based on one of the plurality of RIC style types according to Table 8 described above.

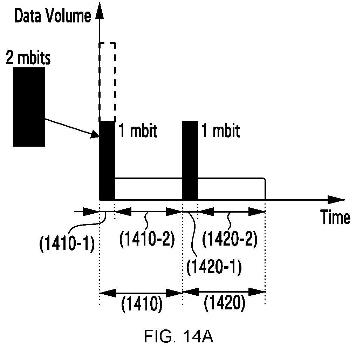

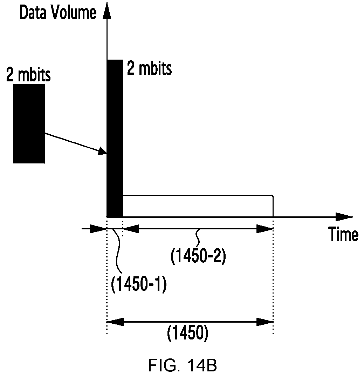

FIGS. 14A and 14B illustrate examples of operations of an E2 node according to an average window.

Referring to FIGS. 14A and 14B, FIG. 14A illustrates an example of an operation of an E2 node 1020 when an average window is not configured. FIG. 14B illustrates an example of an operation of the E2 node 1020 when a size of an average window is configured by a Near-RT RIC 1010.

Referring to FIG. 14A, the E2 node 1020 may transmit data having a size of 2 megabits [mbit] to a terminal. A scheduler 1021 of the E2 node 1020 may identify that a maximum flow bit rate for a non-GBR flow is 1 mbits/sec. The scheduler 1021 of the E2 node 1020 may transmit the 2 [mbit] of data to the terminal based on the maximum flow bit rate for the non-GBR flow.

Each of a time duration 1410 and a time duration 1420 may refer to a time duration for transmitting data. The E2 node 1020 may transmit data to the terminal within the time duration 1410 or the time duration 1420. For example, each of the time duration 1410 and the time duration 1420 may be set to one second.

For example, when the maximum flow bit rate for the non-GBR flow is 1 mbits/sec, the E2 node 1020 may transmit 1 [mbit] of data to the terminal within the time duration 1410 and may transmit 1 [mbit] of data to the terminal within the time duration 1420.

The 1 [mbit] of data may be transmitted within a time duration 1410-1 among the time duration 1410. Since the 1 [mbit] of data has been transmitted within the time duration 1410-1, the E2 node 1020 may not transmit data to the terminal within a time duration 1410-2 among the time duration 1410. When an ASM function is applied, an O-RU (or an RU) connected to the E2 node 1020 may be configured to operate in a sleep mode within the time duration 1410-2 (or at least a portion of the time duration 1410-2). The Near-RT RIC 1010 may control the O-RU to operate in the sleep mode within the time duration 1410-2 based on controlling the E2 node 1020. For example, while the O-RU is in the sleep mode, the Near-RT RIC 1010 may deactivate at least one of an array carrier of the O-RU, a tx array carrier of the O-RU, an rx array carrier of the O-RU, or the O-RU.

The 1 [mbit] of data may be transmitted within a time duration 1420-1 among the time duration 1420. Since the 1 [mbit] of data has been transmitted within the time duration 1420-1, the E2 node 1020 may not transmit data to the terminal within a time duration 1420-2 among the time duration 1420. When the ASM function is applied, the O-RU (or the RU) connected to the E2 node 1020 may be configured to operate in the sleep mode within the time duration 1420-2 (or at least a portion of the time duration 1420-2). The Near-RT RIC 1010 may control the O-RU to operate in the sleep mode within the time duration 1420-2 based on controlling the E2 node 1020. For example, while the O-RU is in the sleep mode, the Near-RT RIC 1010 may deactivate at least one of the array carrier of the O-RU, the tx array carrier of the O-RU, the rx array carrier of the O-RU, or the O-RU.

Referring to FIG. 14B, the Near-RT RIC 1010 may transmit control information for energy saving to the E2 node 1020. For example, the Near-RT RIC 1010 may transmit, to the E2 node 1020, information on a 5G QoS identifier (5QI) (e.g., the '5qi' in Table 5), information on the maximum flow bit rate for the non-GBR flow (e.g., the 'mNgbrFbr' in Table 5), and information on an average window (e.g., the 'Averaging Window' in Table 5).

For example, the Near-RT RIC 1010 may determine a maximum flow bit rate for a service corresponding to the 5QI (or the non-GBR flow). The Near-RT RIC 1010 may determine an average window for calculating a non-GBR flow bit rate. The Near-RT RIC 1010 may control an operation related to energy saving of the E2 node 1020 by transmitting, to the E2 node 1020, the information on the 5G QoS identifier (5QI) (e.g., the '5qi' in Table 5), the information on the maximum flow bit rate for the non-GBR flow (e.g., the 'mNgbrFbr' in Table 5), and the information on the average window (e.g., the 'Averaging Window' in Table 5). The scheduler 1021 of the E2 node 1020 may perform the operation related to energy saving based on the control information for energy saving.

For example, the E2 node 1020 may transmit data having a size of 2 megabits [mbit] to a terminal. The scheduler 1021 of the E2 node 1020 may identify that the maximum flow bit rate for the service corresponding to the 5QI (or the non-GBR flow) is 1 mbit/sec. The scheduler 1021 of the E2 node 1020 may identify that a size of the average window is 2 seconds. The scheduler 1021 of the E2 node 1020 may identify that the 2 [mbit] of data may be transmitted within the average window based on the size of the average window being 2 seconds and the maximum flow bit rate for the service corresponding to the 5QI (or the non-GBR flow) being 1 mbit/sec. The scheduler 1021 of the E2 node 1020 may schedule the 2 [mbit] of data to be transmitted within a time duration 1450 corresponding to the average window. For example, the scheduler 1021 of the E2 node 1020 may schedule the 2 [mbit] of data to be transmitted within a time duration 1450-1 among the time duration 1450. The scheduler 1021 of the E2 node 1020 may schedule data not to be transmitted within a time duration 1450-2 among the time duration 1450.

The 2 [mbit] of data may be transmitted within the time duration 1450-1 among the time duration 1450. Since the 2 [mbit] of data has been transmitted within the time duration 1450-1, the E2 node 1020 may not transmit data to the terminal within the time duration 1450-2 among the time duration 1450. When an ASM function is applied, an O-RU (or an RU) connected to the E2 node 1020 may be configured to operate in a sleep mode within the time duration 1450-2 (or at least a portion of the time duration 1450-2). The Near-RT RIC 1010 may control the O-RU to operate in the sleep mode within the time duration 1450-2 based on controlling the E2 node 1020. For example, while the O-RU is in the sleep mode, the Near-RT RIC 1010 may deactivate at least one of an array carrier of the O-RU, a tx array carrier of the O-RU, an rx array carrier of the O-RU, or the O-RU.

As described above, by configuring the size of the average window to be large, the Near-RT RIC 1010 may schedule data to be transmitted within a short time duration and the O-RU to operate in the sleep mode for a long time.

Referring to FIGS. 14A and 14B, based on the service corresponding to the 5QI, the Near-RT RIC 1010 may configure (or determine) the maximum flow bit rate for the service corresponding to the 5QI (or the non-GBR flow) and/or the average window. For example, in a service in which a traffic pattern tends to surge, the Near-RT RIC 1010 may configure the size of the average window (e.g., the time duration 1450) to be large. The service may include file transfer, a file transfer protocol (FTP) file transfer service, and a hypertext transfer protocol (HTTP) streaming service.

For example, in the service in which the traffic pattern tends to surge, the Near-RT RIC 1010 may configure a policy for energy saving according to an attribute of traffic. For example, the Near-RT RIC 1010 may configure the maximum flow bit rate for the non-GBR flow and/or the average window according to the attribute of the traffic (or the service corresponding to the 5QI). By reducing waste of bandwidth by measuring an amount of transmitted traffic within the average window, the Near-RT RIC 1010 may perform an energy saving function. According to the above-described embodiment, efficiency of a network may increase.

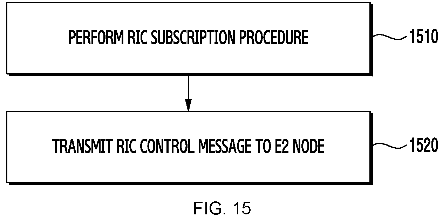

FIG. 15 is a flowchart related to an operation of a Near-RT RIC for performing energy saving. In the following embodiment, each of operations may be sequentially performed, but is not necessarily sequentially performed. For example, an order of each of the operations may be changed, and at least two operations may be performed in parallel.

In operation 1510, a Near-RT RIC 1010 may perform a RIC subscription procedure with an E2 node 1020. For example, the Near-RT RIC 1010 may perform the RIC subscription procedure in order to transmit a RIC control message to the E2 node 1020.

For example, the Near-RT RIC 1010 may transmit a RIC subscription request message to the E2 node 1020. The RIC subscription request message may be related to a RAN function. The RAN function may be related to an E2 service model-cell configuration and control (E2SM-CCC) for energy saving. For example, the RIC subscription request message may be transmitted in order to transmit control information for energy saving to the E2 node 1020. The E2 node 1020 may transmit a RIC subscription response message to the Near-RT RIC 1010. For example, the E2 node 1020 may transmit, to the Near-RT RIC 1010, the RIC subscription response message in response to the RIC subscription request message.

In operation 1520, the Near-RT RIC 1010 may transmit the RIC control message to the E2 node. For example, the Near-RT RIC 1010 may transmit the RIC control message to the E2 node based on the RIC subscription procedure according to operation 1510. Operation 1520 may correspond to operation 1110 of FIG. 11. The RIC control message may be related to the RAN function. The RAN function may be related to the E2SM-CCC for energy saving.

According to an embodiment, the RIC control message may include information according to Table 1 to Table 5. For example, the RIC control message may include information on a 5G quality of service (QoS) identifier (5QI), information on a maximum bit rate flow for a non-guaranteed bit rate (non-GBR) flow, and information on an average window for calculating a non-GBR flow bit rate. An example of the information on the 5QI may be the '5qi' in Table 5. An example of the information on the maximum bit rate flow for the non-guaranteed bit rate (non-GBR) flow may be the 'mNgbrFbr' in Table 5. An example of the information on the average window for calculating the non-GBR flow bit rate may be the 'Averaging Window' in Table 5.

As an example, the non-GBR flow bit rate calculated through the average window may be equal to or less than the maximum bit rate flow for the non-guaranteed bit rate (non-GBR) flow. The Near-RT RIC 1010 may control the E2 node 1020 to calculate the non-GBR flow bit rate to be equal to or less than the maximum bit rate flow for the non-guaranteed bit rate (non-GBR) flow through the average window.

For example, a RIC message may include information for initiating activation or deactivation of an energy saving function related to an advanced sleep mode (ASM). An example of the information for initiating activation or deactivation of the energy saving function related to the advanced sleep mode (ASM) may be the 'energySavingControl' in Table 1.

The Near-RT RIC 1010 may control the E2 node 1020 such that the E2 node 1020 activates the energy saving function related to the advanced sleep mode based on the RIC control message. For example, the energy saving function may be performed based on deactivation of at least some of array carriers of an RU (or an O-RU) related to the E2 node 1020 or the RU. The Near-RT RIC 1010 may control the E2 node 1020 to deactivate at least some of the array carriers of the RU (or the O-RU) related to the E2 node 1020 or the RU.

As an example, the Near-RT RIC 1010 may control, through the RIC control message, the E2 node 1020 to transmit data based on the non-GBR flow bit rate calculated through the average window. The Near-RT RIC 1010 may deactivate at least some of the array carriers of the RU (or the O-RU) related to the E2 node 1020 or the RU within a second time duration different from a first time duration in which the data is transmitted. Within the second time duration, the RU may be configured to operate in a sleep mode.

According to an embodiment, the Near-RT RIC 1010 may receive a RIC indication message from the E2 node 1020. For example, an operation of receiving the RIC indication message from the E2 node 1020 may correspond to operation 1250 of FIG. 12.

For example, the RIC indication message may include information according to Table 7. The RIC indication message may include state information on energy saving. The state information on energy saving may include at least one of information on whether an energy saving function for a cell is activated, information on a specific state related to energy saving, or information on an energy saving policy. An example of the information on whether the energy saving function for the cell is activated may be the 'cesSwitch' in Table 7. An example of the information on the specific state related to energy saving may be the 'energySavingState' in Table 7. An example of the information on the energy saving policy may be the 'asmPolicyList' in Table 7.

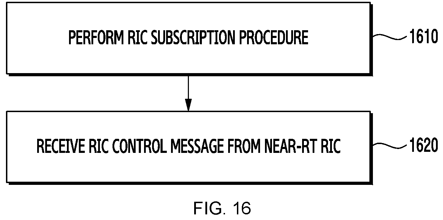

FIG. 16 is a flowchart related to an operation of an E2 node for performing energy saving. In the following embodiment, each of operations may be sequentially performed, but is not necessarily sequentially performed. For example, an order of each of the operations may be changed, and at least two operations may be performed in parallel.

In operation 1610, an E2 node 1020 may perform a RIC subscription procedure with a Near-RT RIC 1010. For example, the Near-RT RIC 1010 may perform the RIC subscription procedure in order to transmit a RIC control message to the E2 node 1020.

For example, the E2 node 1020 may receive a RIC subscription request message from the Near-RT RIC 1010. The Near-RT RIC 1010 may transmit the RIC subscription request message to the E2 node 1020. The RIC subscription request message may be related to a RAN function. The RAN function may be related to an E2 service model-cell configuration and control (E2SM-CCC) for energy saving. For example, the RIC subscription request message may be transmitted in order to transmit control information for energy saving to the E2 node 1020. The E2 node 1020 may transmit a RIC subscription response message to the Near-RT RIC 1010. For example, the E2 node 1020 may transmit, to the Near-RT RIC 1010, the RIC subscription response message in response to the RIC subscription request message.

In operation 1620, the E2 node 1020 may receive, from the Near-RT RIC 1010, the RIC control message from the E2 node 1020. For example, the E2 node 1020 may receive the RIC control message from the Near-RT RIC 1010 based on the RIC subscription procedure according to operation 1610. Operation 1620 may correspond to operation 1110 of FIG. 11. The RIC control message may be related to the RAN function. The RAN function may be related to the E2SM-CCC for energy saving.

According to an embodiment, the RIC control message may include information according to Tables 1 to 5. For example, the RIC control message may include information on a 5G quality of service (QoS) identifier (5QI), information on a maximum bit rate flow for a non-guaranteed bit rate (non-GBR) flow, and information on an average window for calculating a non-GBR flow bit rate. An example of the information on the 5QI may be the '5qi' in Table 5. An example of the information on the maximum bit rate flow for the non-guaranteed bit rate (non-GBR) flow may be the 'mNgbrFbr' in Table 5. An example of the information on the average window for calculating the non-GBR flow bit rate may be the 'Averaging Window' in Table 5.

As an example, the non-GBR flow bit rate calculated through the average window may be equal to or less than the maximum bit rate flow for the non-guaranteed bit rate (non-GBR) flow. Based on the RIC control message, the E2 node 1020 (or a scheduler 1021 of the E2 node 1020) may calculate the non-GBR flow bit rate to be equal to or less than the maximum bit rate flow for the non-guaranteed bit rate (non-GBR) flow through the average window.

For example, a RIC message may include information for initiating activation or deactivation of an energy saving function related to an advanced sleep mode (ASM). An example of the information for initiating activation or deactivation of the energy saving function related to the advanced sleep mode (ASM) may be the 'energySavingControl' in Table 1.

The E2 node 1020 may activate the energy saving function related to the advanced sleep mode based on the RIC control message. For example, the energy saving function may be performed based on deactivation of at least some of array carriers of an RU (or an O-RU) related to the E2 node 1020 or deactivation of the RU. The E2 node 1020 may deactivate at least some of the array carriers of the RU (or the O-RU) related to the E2 node 1020 or the RU.

As an example, the E2 node 1020 may transmit data based on the non-GBR flow bit rate calculated through the average window. The E2 node 1020 may deactivate at least some of the array carriers of the RU (or the O-RU) related to the E2 node 1020 or the RU within a second time duration different from a first time duration in which the data is transmitted. Within the second time duration, the RU may be configured to operate in a sleep mode. The E2 node 1020 may control the RU to operate in the sleep mode within the second time duration.

According to an embodiment, the E2 node 1020 may transmit a RIC indication message to the Near-RT RIC 1010. For example, an operation in which the E2 node 1020 transmits the RIC indication message may correspond to operation 1250 of FIG. 12.

For example, the RIC indication message may include information according to Table 7. The RIC indication message may include state information on energy saving. The state information on energy saving may include at least one of information on whether an energy saving function for a cell is activated, information on a specific state related to energy saving, or information on an energy saving policy. An example of the information on whether the energy saving function for the cell is activated may be the 'cesSwitch' in Table 7. An example of the information on the specific state related to energy saving may be the 'energySavingState' in Table 7. An example of the information on the energy saving policy may be the 'asmPolicyList' in Table 7.

According to an embodiment, a method performed by an apparatus of a near-real time (RT) radio access network intelligent controller (RIC) may comprise transmitting, to an E2 node, a RIC control message through an E2 interface. The RIC control message may include information on a 5G quality of service (QoS) identifier (5QI), information on a maximum bit rate flow for a non-guaranteed bit rate (non-GBR) flow, and information on an average window for calculating a non-GBR flow bit rate.

According to an embodiment, the non-GBR flow bit rate calculated through the average window may be less than or equal to the maximum bit rate flow for the non-guaranteed bit rate (non-GBR) flow.

According to an embodiment, the RIC control message may include information for initiating activation or deactivation of an energy saving function related to an advanced sleep mode (ASM).

According to an embodiment, the method may comprise controlling, based on the RIC control message, the E2 node such that the E2 node activates the energy saving function. The energy saving function may be performed based on deactivation of at least some of array carriers of a radio unit (RU) related to the E2 node or the RU.

According to an embodiment, the method may comprise controlling, through the RIC control message, the E2 node to transmit data based on the non-GBR flow bit rate calculated through the average window. The method may comprise controlling the E2 node to deactivate at least some of the array carriers of the RU related to the E2 node or the RU within a second time duration different from a first time duration in which the data is transmitted.

According to an embodiment, the method may comprise receiving, from the E2 node, a RIC indication message. The RIC indication message may include at least one of information on whether an energy saving function for a cell is activated, information on a specific state related to energy saving, or information on an energy saving policy.

According to an embodiment, the method may comprise performing a RIC subscription procedure with the E2 node. The method may comprise, based on the RIC subscription procedure, transmitting, to the E2 node, the RIC control message.

According to an embodiment, a method performed by an apparatus of an E2 node may comprise receiving, from a near-real time (RT) radio access network intelligent controller (RIC), a RIC control message through an E2 interface. The RIC control message may include information on a 5G quality of service (QoS) identifier (5QI), information on a maximum bit rate flow for a non-guaranteed bit rate (non-GBR) flow, and information on an average window for calculating a non-GBR flow bit rate.

According to an embodiment, the non-GBR flow bit rate calculated through the average window may be less than or equal to the maximum bit rate flow for the non-guaranteed bit rate (non-GBR) flow.

According to an embodiment, the RIC control message may include information for initiating activation or deactivation of an energy saving function related to an advanced sleep mode (ASM).

According to an embodiment, an apparatus of a near-real time (RT) radio access network intelligence controller (RIC) may comprise a transceiver, a processor, and memory including instructions. The instructions, when executed by the processor, may cause the apparatus to transmit, to an E2 node, a RIC control message through an E2 interface. The RIC control message may include information on a 5G quality of service (QoS) identifier (5QI), information on a maximum bit rate flow for a non-guaranteed bit rate (non-GBR) flow, and information on an average window for calculating a non-GBR flow bit rate.

According to an embodiment, the non-GBR flow bit rate calculated through the average window may be less than or equal to the maximum bit rate flow for the non-guaranteed bit rate (non-GBR) flow.

According to an embodiment, the RIC control message may include information for initiating activation or deactivation of an energy saving function related to an advanced sleep mode (ASM).

According to an embodiment, the instructions, when executed by the processor, may cause the apparatus to control, based on the RIC control message, the E2 node such that the E2 node activates the energy saving function. The energy saving function may be performed based on deactivation of at least some of array carriers of a radio unit (RU) related to the E2 node or the RU.

According to an embodiment, the instructions, when executed by the processor, may cause the apparatus to control, through the RIC control message, the E2 node to transmit data based on the non-GBR flow bit rate calculated through the average window. The instructions, when executed by the processor, may cause the apparatus to control the E2 node to deactivate at least some of the array carriers of the RU related to the E2 node or the RU within a second time duration different from a first time duration in which the data is transmitted.

According to an embodiment, the instructions, when executed by the processor, may cause the apparatus to receive, from the E2 node, a RIC indication message. The RIC indication message may include at least one of information on whether an energy saving function for a cell is activated, information on a specific state related to energy saving, or information on an energy saving policy.

According to an embodiment, the instructions, when executed by the processor, may cause the apparatus to perform a RIC subscription procedure with the E2 node. The instructions, when executed by the processor, may cause the apparatus to transmit, to the E2 node, the RIC control message based on the RIC subscription procedure.

According to an embodiment, an apparatus of an E2 node may comprise a transceiver, a processor, and memory including instructions. The instructions, when executed by the processor, may cause the apparatus to receive, from a near-real time (RT) radio access network intelligent controller (RIC), a RIC control message through an E2 interface. The RIC control message may include information on a 5G quality of service (QoS) identifier (5QI), information on a maximum bit rate flow for a non-guaranteed bit rate (non-GBR) flow, and information on an average window for calculating a non-GBR flow bit rate.

According to an embodiment, the non-GBR flow bit rate calculated through the average window may be less than or equal to the maximum bit rate flow for the non-guaranteed bit rate (non-GBR) flow.

According to an embodiment, a non-transitory computer readable storage medium may store one or more programs. The one or more programs may comprise instructions that, when executed by a processor of an apparatus of a near-real time (RT) radio access network intelligence controller (RIC) comprising a transceiver, may cause the apparatus to transmit, to an E2 node, a RIC control message through an E2 interface. The RIC control message may include information on a 5G quality of service (QoS) identifier (5QI), information on a maximum bit rate flow for a non-guaranteed bit rate (non-GBR) flow, and information on an average window for calculating a non-GBR flow bit rate.

According to an embodiment, a method performed by a near-real time radio access network intelligence controller (Near-RT RIC) may comprise transmitting, to an E2 node, a radio access network intelligence controller (RIC) subscription request message for energy saving optimization, receiving, from the E2 node, a RIC subscription response message in response to the RIC subscription request message, and transmitting, to the E2 node, a RIC control request message including a RIC style type indicating cell configuration related to the E2 node, and energy saving information. The energy saving information may include a fifth generation quality of service identifier (5QI) value, a maximum bit rate for a non-guaranteed bit rate (non-GBR) flow having the 5QI value, and an average window indicating a duration for calculating the maximum bit rate for the non-GBR flow.

For example, the RIC control request message may include policy information on an advanced sleep mode (ASM). The energy saving information may be included in the policy information on the ASM.

For example, the RIC control request message may include a data direction indicating one of uplink (UL) or downlink (DL).

For example, the method may comprise receiving, from a non-real time RIC (non-RT RIC), an A1 policy message for the energy saving optimization, based on the A1 policy message, transmitting, to the E2 node, another subscription request message for key performance measurement, and receiving, from the E2 node, another subscription response message in response to the another subscription request message.

For example, the method may comprise, based on the another subscription response message, receiving, from the E2 node, a RIC indication message including measurement information of the E2 node for the energy saving optimization, and determining, based on the measurement information, the energy saving information.

For example, the E2 node may comprise a distributed unit (DU).

According to an embodiment, a method performed by an E2 node may comprise receiving, from a near-real time radio access network intelligence controller (Near-RT RIC), a radio access network intelligence controller (RIC) subscription request message for energy saving optimization, transmitting, to the Near-RT RIC, a RIC subscription response message in response to the RIC subscription request message, and receiving, from the Near-RT RIC, a RIC control request message including a RIC style type indicating cell configuration related to the E2 node, and energy saving information. The energy saving information may include a fifth generation quality of service identifier (5QI) value, a maximum bit rate for a non-guaranteed bit rate (non-GBR) flow having the 5QI value, and an average window indicating a duration for calculating the maximum bit rate for the non-GBR flow.

For example, the RIC control request message may include policy information on an advanced sleep mode (ASM). The energy saving information may be included in the policy information on the ASM.

For example, the RIC control request message may include a data direction indicating one of uplink (UL) or downlink (DL).

For example, the method may comprise receiving, from the Near-RT RIC, another subscription request message for key performance measurement, and transmitting, to the Near-RT RIC, another subscription response message in response to the another subscription request message.

For example, the method may comprise, based on the another subscription response message, transmitting, to the Near-RT RIC, a RIC indication message including measurement information of the E2 node for the energy saving optimization.

For example, the E2 node may comprise a distributed unit (DU).

According to an embodiment, a network apparatus for performing functions of a near-real time radio access network intelligence controller (Near-RT RIC) may comprise at least one transceiver including communication circuitry, at least one processor including processing circuitry, and memory storing instructions, including one or more storage media. The instructions, when executed by the at least one processor individually or collectively, may cause the network apparatus to transmit, to an E2 node, a radio access network intelligence controller (RIC) subscription request message for energy saving optimization, receive, from the E2 node, a RIC subscription response message in response to the RIC subscription request message, and transmit, to the E2 node, a RIC control request message including a RIC style type indicating cell configuration related to the E2 node, and energy saving information. The energy saving information may include a fifth generation quality of service identifier (5QI) value, a maximum bit rate for a non-guaranteed bit rate (non-GBR) flow having the 5QI value, and an average window indicating a duration for calculating the maximum bit rate for the non-GBR flow.

According to an embodiment, a network apparatus for performing functions of an E2 node may comprise at least one transceiver including communication circuitry, at least one processor including processing circuitry, and memory storing instructions, including one or more storage media. The instructions, when executed by the at least one processor individually or collectively, may cause the network apparatus to receive, from a near-real time radio access network intelligence controller (Near-RT RIC), a radio access network intelligence controller (RIC) subscription request message for energy saving optimization, transmit, to the Near-RT RIC, a RIC subscription response message in response to the RIC subscription request message, and receive, from the Near-RT RIC, a RIC control request message including a RIC style type indicating cell configuration related to the E2 node, and energy saving information. The energy saving information may include a fifth generation quality of service identifier (5QI) value, a maximum bit rate for a non-guaranteed bit rate (non-GBR) flow having the 5QI value, and an average window indicating a duration for calculating the maximum bit rate for the non-GBR flow.

According to the above-described embodiment, a Near-RT RIC may request an E2 node (e.g., an O-DU) to perform an ASM operation for specific cells. According to the ASM operation, non-GBR bearer throughput may be limited. According to the above-described embodiment, in order to limit the non-GBR bearer throughput, the Near-RT RIC may transmit, to the E2 node, information indicating a maximum bit rate flow for a non-GBR flow according to a service corresponding to a 5QI. The Near-RT RIC may transmit, to the E2 node, information indicating an average window for calculating a non-GBR flow bit rate. According to the above-described embodiment, since a target QoS is different for each service, the Near-RT RIC may apply an ASM to a cell by differently configuring the average window for each service. According to the above-described embodiment, a network resource may be optimized. As the average window is differently set for each service, the network resource may be efficiently utilized. As the network resource is efficiently utilized, performance of an entire network system may be improved, and a stable service may be provided to more users.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

Meanwhile, specific embodiments have been described in the detailed description of the present disclosure, and of course, various modifications are possible without departing from the scope of the present disclosure.

## Claims

1. A method performed by a near-real time radio access network intelligence controller (Near-RT RIC), the method comprising:
transmitting, to an E2 node, a radio access network intelligence controller (RIC) subscription request message for energy saving optimization;
receiving, from the E2 node, a RIC subscription response message in response to the RIC subscription request message; and
transmitting, to the E2 node, a RIC control request message including a RIC style type indicating cell configuration related to the E2 node, and energy saving information,
wherein the energy saving information includes a fifth generation quality of service identifier (5QI) value, a maximum bit rate for a non-guaranteed bit rate (non-GBR) flow having the 5QI value, and an average window indicating a duration for calculating the maximum bit rate for the non-GBR flow.

2. The method of claim 1, wherein the RIC control request message includes policy information on an advanced sleep mode (ASM), and
wherein the energy saving information is included in the policy information on the ASM.

3. The method of any one of claims 1 and 2, wherein the RIC control request message further includes a data direction indicating one of uplink (UL) or downlink (DL).

4. The method of any one of claims 1 to 3, wherein the method further comprises:
receiving, from a non-real time RIC (non-RT RIC), an A1 policy message for the energy saving optimization;
based on the A1 policy message, transmitting, to the E2 node, another subscription request message for key performance measurement; and
receiving, from the E2 node, another subscription response message in response to the another subscription request message.

5. The method of claim 4, wherein the method further comprises:
based on the another subscription response message, receiving, from the E2 node, a RIC indication message including measurement information of the E2 node for the energy saving optimization; and
determining, based on the measurement information, the energy saving information.

6. The method of any one of claims 1 to 5, wherein the E2 node comprises a distributed unit (DU).

7. A method performed by an E2 node, the method comprising:
receiving, from a near-real time radio access network intelligence controller (Near-RT RIC), a radio access network intelligence controller (RIC) subscription request message for energy saving optimization;
transmitting, to the Near-RT RIC, a RIC subscription response message in response to the RIC subscription request message; and
receiving, from the Near-RT RIC, a RIC control request message including a RIC style type indicating cell configuration related to the E2 node, and energy saving information,
wherein the energy saving information includes a fifth generation quality of service identifier (5QI) value, a maximum bit rate for a non-guaranteed bit rate (non-GBR) flow having the 5QI value, and an average window indicating a duration for calculating the maximum bit rate for the non-GBR flow.

8. The method of claim 7, wherein the RIC control request message includes policy information on an advanced sleep mode (ASM), and
wherein the energy saving information is included in the policy information on the ASM.

9. The method of any one of claims 7 and 8, wherein the RIC control request message further includes a data direction indicating one of uplink (UL) or downlink (DL).

10. The method of any one of claims 7 to 9, wherein the method further comprises:
receiving, from the Near-RT RIC, another subscription request message for key performance measurement; and
transmitting, to the Near-RT RIC, another subscription response message in response to the another subscription request message.

11. The method of claim 10, wherein the method further comprises:
based on the another subscription response message, transmitting, to the Near-RT RIC, a RIC indication message including measurement information of the E2 node for the energy saving optimization.

12. The method of any one of claims 7 to 11, wherein the E2 node comprises a distributed unit (DU).

13. A network apparatus for performing functions of a near-real time radio access network intelligence controller (Near-RT RIC), comprising:
at least one transceiver including communication circuitry;
at least one processor including processing circuitry; and
memory storing instructions, including one or more storage media,
wherein the instructions, when executed by the at least one processor individually or collectively, cause the network apparatus to:
transmit, to an E2 node, a radio access network intelligence controller (RIC) subscription request message for energy saving optimization;
receive, from the E2 node, a RIC subscription response message in response to the RIC subscription request message; and
transmit, to the E2 node, a RIC control request message including a RIC style type indicating cell configuration related to the E2 node, and energy saving information,
wherein the energy saving information includes a fifth generation quality of service identifier (5QI) value, a maximum bit rate for a non-guaranteed bit rate (non-GBR) flow having the 5QI value, and an average window indicating a duration for calculating the maximum bit rate for the non-GBR flow.

14. A network apparatus for performing functions of an E2 node, comprising:
at least one transceiver including communication circuitry;
at least one processor including processing circuitry; and
memory storing instructions, including one or more storage media,
wherein the instructions, when executed by the at least one processor individually or collectively, cause the network apparatus to:
receive, from a near-real time radio access network intelligence controller (Near-RT RIC), a radio access network intelligence controller (RIC) subscription request message for energy saving optimization;
transmit, to the Near-RT RIC, a RIC subscription response message in response to the RIC subscription request message; and
receive, from the Near-RT RIC, a RIC control request message including a RIC style type indicating cell configuration related to the E2 node, and energy saving information,
wherein the energy saving information includes a fifth generation quality of service identifier (5QI) value, a maximum bit rate for a non-guaranteed bit rate (non-GBR) flow having the 5QI value, and an average window indicating a duration for calculating the maximum bit rate for the non-GBR flow.
